# EUROPÄISCHE PATENTSCHRIFT

(11) **EP 2 907 619 B1**
(45) Veröffentlichungstag und Bekanntmachung des Hinweises auf die Patenterteilung: **26.12.2018**
(21) Anmeldenummer: 15155259.3
(22) Anmeldetag: 16.02.2015
(51) Int. Cl.: B23Q 11/12, B23Q 11/14, B23Q 1/01

(54) **Werkzeugmaschine mit im Arbeitsbetrieb wärmeerzeugenden Funktionskomponenten und Verfahren dafür**
Machine tool with functional components that generate heat when in operation and method therefor
Machine-outil dotée de composants de fonction produisant de la chaleur lors du fonctionnement et méthode pour celle-ci

(30) Priorität: 17.02.2014 DE 102014202878
(43) Veröffentlichungstag der Anmeldung: 19.08.2015
(73) Patentinhaber: Deckel Maho Seebach GmbH, 99846 Seebach (DE)
(72) Erfinder: Tüllmann, Udo, 99817 Eisenach (DE)
(74) Vertreter: MERH-IP Matias Erny Reichl Hoffmann Patentanwälte PartG mbB

(56) Entgegenhaltungen:
- WO-A2-2013/012224
- CH-A5- 660 322
- DE-C- 600 133
- US-A- 2 279 569
- US-A- 3 793 777

## Beschreibung

Die vorliegende Erfindung betrifft die Temperierung einer Werkzeugmaschine, mit im Arbeitsbetrieb wärmeerzeugenden Funktionskomponenten die an einem Maschinengestell angeordnet sind.

Werkzeugmaschinen weisen im Allgemeinen aufgrund der vorhandenen thermischen Ausdehnungskoeffizienten der verschiedenen Baugruppen und Gestellbauteile, im Betrieb einen Wärmegang auf. Der Wärmegang ergibt sich aus der linearen thermischen Dehnung und aus den Temperaturdifferenzen, die sich an den Bauteilen von Werkzeugmaschinen herausbilden. Die Temperaturdifferenzen im Gestell der Werkzeugmaschine führen zu einer ungleichmäßigen Ausdehnung der verschiedenen Bauteile des Gestells und somit zu einer erhöhten Bearbeitungsungenauigkeit bei der Bearbeitung des Werkstücks. Diese erhöhte Bearbeitungsungenauigkeit ist zum Beispiel auf die temperaturbedingte ungleichmäßige Krümmung der Führungsschienen am Maschinenbett der Werkzeugmaschine zurückzuführen.

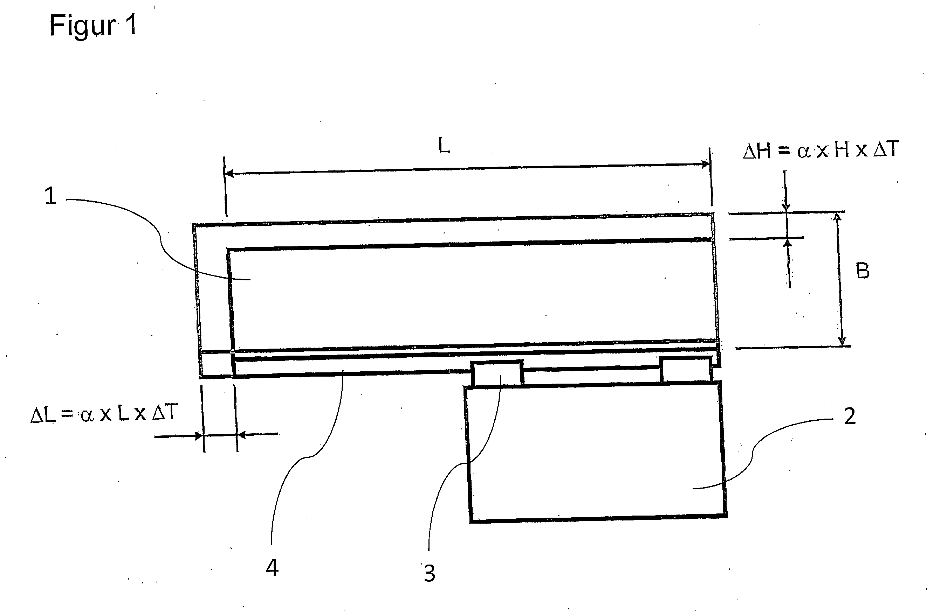

Die wärmebedingte Ausdehnung eines gleichmäßig erwärmten Schlittens 1 einer Werkzeugmaschine ist in Figur 1 ist gezeigt. Der dargestellte Wärmegang ergibt sich dabei zum einen aus der linearen thermischen Dehnung, und zum anderen aus den Temperaturdifferenzen in den Bauteilen. Ursache der Temperaturdifferenzen ist die ungleichmäßige Wärmeeinbringung in die Bauteile der Werkzeugmaschine. Die Bauteile sind zum Beispiel an Führungen oder mit Antrieben einseitig verbunden, sodass die verbundene Seite stärker und schneller erwärmt wird als die nicht verbundene gegenüberliegende Seite. Somit ergibt sich sehr häufig die Situation, dass ein Gestellbauteil einer Werkzeugmaschine eine warme beziehungsweise sich schnell erwärmende Seite aufweist, auf der Führungen und Antriebe platziert sind, und eine kalte beziehungsweise eine sich langsamer und weniger stark erwärmende Seite aufweist.

Eine gleichmäßige Erwärmung des Schlittens 1 führt zu einer gleichmäßigen Änderung der Länge, ΔL, beziehungsweise einer gleichmäßigen Änderung der Höhe, ΔH, wie in Figur 1 dargestellt. Der gleichmäßig erwärmte Schlitten 1 ist auf der Führung 3 am Maschinenbett 2 geführt, wobei in Folge der gleichmäßigen Erwärmung keine Krümmung der Bearbeitungsachsen eintritt. In der Praxis wird eine absolut gleichmäßige Erwärmung des Schlittens im Betrieb der Werkzeugmaschine in der Regel jedoch nicht erreicht.

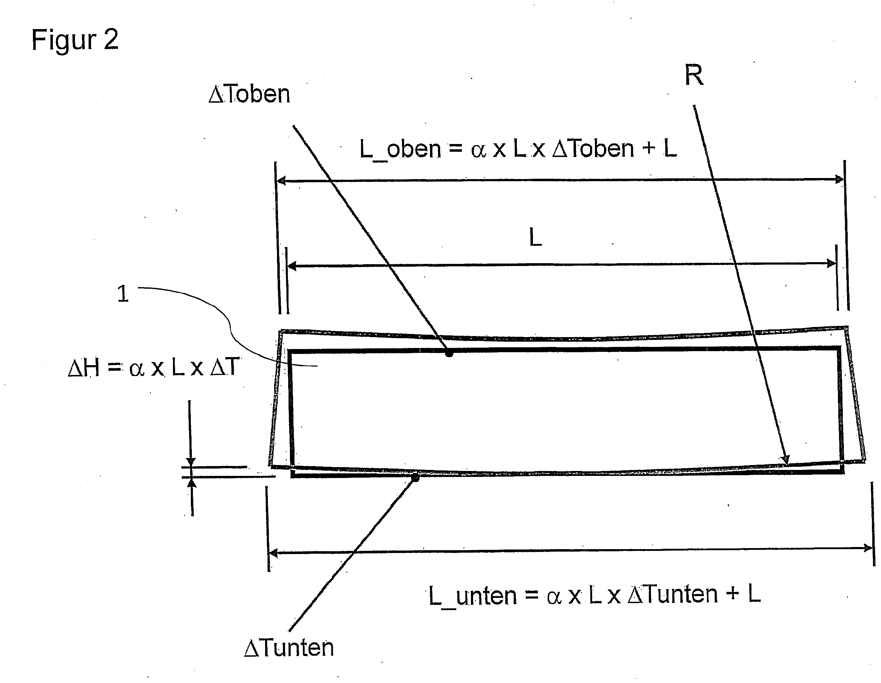

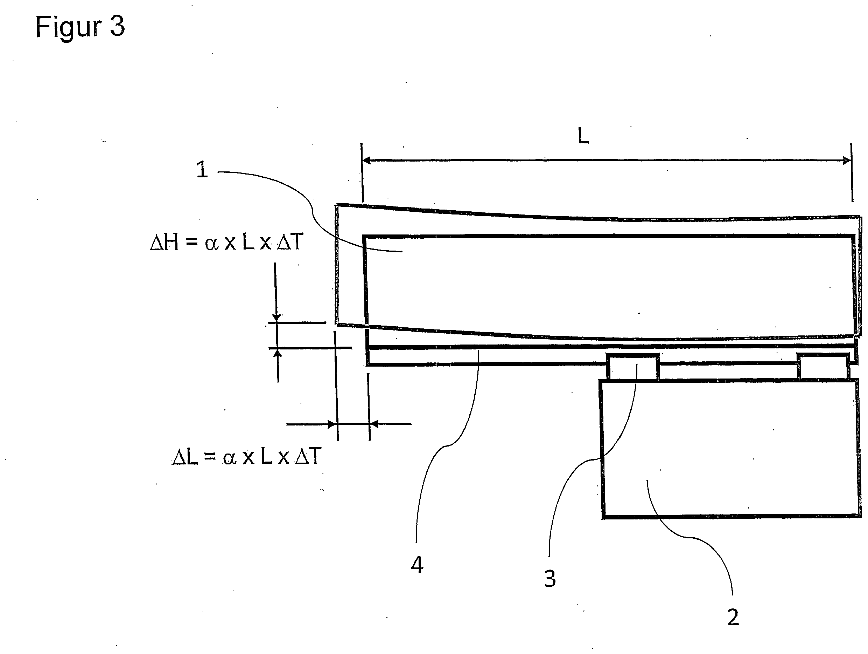

Im Vergleich dazu, ist in Figur 2, ein einseitig erwärmter Schlitten 1 dargestellt. Der Schlitten 1 weist eine obere Seite und eine untere Seite auf. Die obere Seite wird stärker erwärmt. Wie in Figur 1 gezeigt, ist der Schlitten 1 entlang der Führungen 3 geführt, die Bewegung entlang der Führungen erzeugt Wärme, sodass die untere Temperaturdifferenz, ΔT_unten, höher ist, als die Temperaturdifferenz an der Oberseite , ΔT_oben, des Schlittens 1. Durch die höhere Temperaturdifferenz an der Unterseite, ergibt sich an der Unterseite eine größere temperaturbedingte Verlängerung, L_unten, als an der Oberseite, L_oben, und somit eine Biegung des Schlittens 1. Somit führt die ungleichmäßige Erwärmung des Schlittens 1 zu einer zweidimensionalen Änderung der Schlittenlängsachse. Der ungleichmäßig erwärmte Schlitten 1 samt Führungen und Maschinenbett 2 ist nochmals in Figur 3 dargestellt. Die Krümmung des Schlittens 1 führt zu einer erhöhten Bearbeitungsungenauigkeit der Werkzeugmaschine in Folge der gekrümmten Bearbeitungsachse.

Zur Reduktion der auftretenden Verformungen der ungleichmäßig erwärmten Werkzeugmaschine sind verschiedene Möglichkeiten bekannt.

Eine Möglichkeit die Verformungen an einer ungleichmäßig erwärmten Werkzeugmaschine zu kompensieren ist die sogenannte steuerungstechnische Kompensation. Dabei wird eine Temperatur gemessen und die Veränderung des Messwerts mit einem festen Wert, dem sogenannten "Kompensationsfaktor", verrechnet. Der so ermittelte Wert wird als Korrekturwert in die Achsregelung der jeweiligen Maschine übernommen. Diese sehr verbreitete und allgemein übliche Methode der Kompensation hat jedoch den Nachteil, dass die steuerungstechnische Kompensation ungeeignet ist einen Wärmegang auszugleichen dessen Wert von der Achsposition der Werkzeugmaschine abhängt. Verbiegungen eines ungleichmäßig erwärmten Bauteils können somit nicht ausgeglichen werden. Aus der WO 2012/032423 A1, ist eine Maschine mit einem solchen Ausgleichsmechanismus bekannt. Dabei wird die Verformung der Maschine über Detektionseinrichtungen ermittelt und anschließend wird über die Korrekturvorrichtung ein Ausgleich der ermittelten Abweichungen durchgeführt.

Die WO 2013/012224 A2 betrifft eine Struktur zur Reduktion der thermischen Verformung einer Werkzeugmaschine. Durch Vorsehung von Rohren, welche mit Kühlungsöl gefüllt sind, wird über eine Pumpe ein Kühlkreislauf ausgebildet.

Die DE 601 33 C betrifft eine Metallhobelmaschine mit einem Tisch und einem Bett. Zum Hintanhalten von Wärmeverspannungen und Wärmedehnungen des Betts und des Tisches werden ein als Hohlbehälter ausgebildeter Tisch und ein als Hohlbehälter ausgebildetes Bett mit einer Flüssigkeit ganz oder teilweise gefüllt.

Eine weitere Möglichkeit ist die passive Temperierung einer Werkzeugmaschine. Diese Möglichkeit wird vor allem bei Schleifmaschinen eingesetzt. Die jeweiligen Schleifmaschinen sind üblicherweise als Flachbettmaschinen ausgeführt. Alle Schlitten und Werkzeugträger werden oberhalb des Maschinenbetts angeordnet. Das Prozesskühlmittel wird nicht nur zur Zerspannungsstelle zugeführt, sondern auch dazu benutzt, die Aufbauten auf dem Maschinenbett zu berieseln. Dadurch wird eine starke Temperaturdifferenz zwischen den Maschinenbauteilen vermieden und somit kann sich ein hoher Wärmegang nicht entwickeln. Die Wirksamkeit dieser Methode ist jedoch automatisch begrenzt, wenn die betreffende Maschine keine Flachbettmaschine ist. Dann verbergen sich großvolumige Maschinenbauteile meist hinter Abdeckungen, die eine direkte Benetzung mit dem Prozesskühlmittel verhindern. Diese Einschränkung gilt somit für den bei Weitem überwiegenden Teil der Dreh- und Fräsmaschinen und auch für große Schleifmaschinen. Zudem ist bei dieser Art der passiven Temperierung der Werkzeugmaschine eine Trockenbearbeitung, d.h. eine Bearbeitung ohne Prozesskühlmittel, nicht möglich. Aus der DE 41 32 822 A1, ist eine derartige Kühlung bekannt. Dabei wird Kühlmittel über eine frei schwenkbare Sprühdüse auf vorgegebene Stellen der Werkzeugmaschine gesprüht um diese Stellen zu kühlen.

Eine weitere Möglichkeit bietet die aktive Temperierung der Werkzeugmaschine. Dabei wird mit Hilfe einer Kältemaschine ein Medium, das auf eine fixe oder eine entsprechend einer Führungsgröße geführte Temperatur gebracht wurde, zur lokalen Temperierung einiger der Bauteile der Werkzeugmaschinen genutzt. Dadurch werden insbesondere die Zentren der Wärmeproduktion wie zum Beispiel Spindeln oder Antriebe gekühlt. Aus der DE 20 2012 003 528 U1 ist eine Einrichtung zur Kompensation der thermischen Verformungen an einer Motorspindel bekannt. Dabei wird ein Kühlmedium über eine Kühleinheit aktiv gekühlt und über ein Kühlkanalsystem um die Baugruppen herumgeleitet um diese zu kühlen. Der Nachteil der aktiven Temperierung ist jedoch in den damit verbundenen Kosten zu sehen. Pro Kilowatt Kühlleistung rechnet man mit ca. 1.000 EUR Kosten. Zudem bildet das Kühlaggregat in der Werkzeugmaschine eine neue Fehlerquelle, da es in der rauen Produktionsumgebung häufig zu Ausfällen kommen kann. Auf die Maschine und das Werkstück wirken zudem auch Umgebungsfaktoren. So wird ein großer Teil der Zerspanungsoperationen mit einem Prozesskühlmittel durchgeführt. Das kann entweder eine Emulsion oder ein Schneideöl sein. Hat dieses Medium eine andere Temperatur als das Kühlmedium, wird dies eher zu einer Ausbildung von Temperaturdifferenzen an dem Bauteil führen. Die aktive Kühlung des Prozesskühlmittels zusätzlich zur aktiven Temperierung der Werkzeugmaschine auf ein gemeinsames Niveau, stellt eine Hightech-Lösung dar, die mit starker Erhöhung der Kosten und der Komplexität der Maschine verbunden ist.
Die genannten aktiven und passiven Temperierungen weisen prinzipbedingt auch den Nachteil auf, dass sie die Herausbildung von Temperaturdifferenzen nicht verhindern können. So führt die nur einseitige Kühlung eines Bauteils natürlich gerade zur Ausbildung von Temperaturdifferenzen in diesen Bauteilen.
Eine Aufgabe ist es, eine gattungsgemäße Werkzeugmaschine so auszubilden, dass die oben genannten Nachteile vermieden beziehungsweise reduziert werden. Eine weitere Aufgabe der vorliegenden Erfindung liegt darin, die Ausbildung von thermischen Verlagerungen an der Werkzeugmaschine ohne großen technischen Aufwand zu reduzieren.

Diese Aufgaben werden durch die Merkmale der unabhängigen Patentansprüche gelöst. Die abhängigen Ansprüche betreffen vorteilhafte Ausführungsformen der Erfindung.
Die erfindungsgemäße Werkzeugmaschine weist ein Maschinengestell auf an dem im Arbeitsbetrieb wärmeerzeugende Funktionskomponenten angeordnet sind. Innerhalb des Maschinengestells sind Hohlraumstrukturen zur Ausbildung eines Umwälzkreislaufs ausgebildet, in dem ein Kühlmedium innerhalb des Maschinengestells umgewälzt wird. Das Maschinengestell weist erste Bereiche auf, in denen die wärmeerzeugenden Funktionskomponenten angeordnet sind und zweite Bereiche, die von den ersten Bereichen beabstandet sind. Der durch die Funktionskomponenten erzeugte Wärmeeintrag in die zweiten Bereiche ist geringer als in den ersten Bereichen und die Hohlraumstrukturen weisen erste Abschnitte auf, die in den ersten Bereichen angeordnet sind und zweite Abschnitte, die in den zweiten Bereichen angeordnet sind. Die in dem Maschinengestell befindlichen Hohlraumstrukturen sind derart bemessen, dass beim Umwälzen des Kühlmediums von den ersten Abschnitten in die zweiten Abschnitte die von den Funktionskomponenten eingetragene Wärme in die zweiten Bereiche abgeführt wird und auf diese Weise ein Temperaturabgleich zwischen den ersten und den zweiten Bereichen bewirkt wird. Durch den durch das Umwälzen des Kühlmediums von den ersten Abschnitten in die zweiten Abschnitte bewirkten Wärmeausgleich, kann eine kostengünstige passive Umlauftemperierung der Werkzeugmaschine erreicht werden und die thermischen Verlagerungen der Werkzeugmaschine (insbesondere die Verbiegungen) stark reduziert werden können. Es werden Temperaturdifferenzen zwischen der warmen und der kalten Seite des Gestells ausgeglichen oder zumindest stark reduziert. Demzufolge wird die Verbiegung der jeweiligen Baugruppen ebenfalls vermieden oder stark verringert, was auch für die thermische Verlagerung gilt, die sich daraus ergibt. Die Bearbeitungsgenauigkeit der Werkzeugmaschine wird dadurch erhöht.

Entgegen dem weit verbreiteten Prinzip der ausschließlichen Anordnung der Kühlkanäle unmittelbar bei den Wärmeerzeugern, wie zum Beispiel bei der oben genannten Spindelkühlung, werden die erfindungsgemäßen Kanäle sowohl bei den wärmeerzeugenden Bereichen der Werkzeugmaschine als auch bei den Bereichen ohne Wärmeerzeuger vorgesehen. Anders als im Stand der Technik wird zudem keine Kältemaschine vorgesehen, sondern durch das Umwälzen des Kühlmediums innerhalb der Hohlraumstrukturen findet ein Temperaturausgleich innerhalb des Maschinengestells statt. Daher nimmt die Gesamttemperatur des Maschinengestells zwar zu, die Temperaturdifferenzen innerhalb des Maschinengestells werden jedoch abgebaut. Somit wird mit der vorliegenden Erfindung das vorherrschende Prinzip, dass die Bearbeitungsgenauigkeit der Werkzeugmaschine lediglich durch eine Kühlung der warmen Bereiche der Werkzeugmaschine erreicht werden kann dadurch durchbrochen, dass man erfindungsgemäß die Wärme der Funktionskomponenten zur gleichmäßigen Erwärmung des gesamten Maschinengestells nutzt und diese somit nicht einseitig in eine Kältemaschine abführt.

Das Volumen und die Geometrie der Hohlräume können dimensioniert werden, indem die Oberfläche des Hohlraums so gewählt wird, dass sich ein ausreichender Wärmeübergang zwischen dem Werkstoff des Bauteils und dem Medium ergibt. Als grobe Grundregel kann dienen, die wärmeübertragende Fläche so zu wählen, dass die bei einer geringen Temperaturdifferenz zwischen Werkstoff und Medium übertragbare Wärmemenge dem Mehrfachen der Wärmeeinkopplung in das Bauteil entspricht. Dem Fachmann ist klar, dass basierend auf der Wahl des Materials des Maschinengestells, insbesondere in Abhängigkeit des Wärmeleitkoeffizienten (und des Wärmeübergangskoeffizienten) des gewählten Materials, basierend auf der Leistung der gewählten Pumpe und der damit verbundenen maximal erreichbaren Umwälzgeschwindigkeit des Kühlmediums und des maximal erreichbaren Wärmeeintrags der wärmeerzeugenden Funktionskomponenten in das Maschinengestell die Querschnitte der Bohrungen bzw. Hohlraumstrukturen und die Lage der Bohrungen und Hohlraumstrukturen so zu bemessen sind, dass der gewünschte maximale Temperaturgradient im Maschinengestell (von 5°C und bevorzugt 3 °C und am meisten bevorzugt 2 °C) erreichbar ist. Dabei sind klarerweise auch die Eigenschaften (wie Wärmekapazität und Viskosität) des gewählten Kühlmittels zu berücksichtigen. Zudem können die erforderlichen Abmessungen problemlos durch routinemäßige Versuchsverfahren ermittelt werden.

Die Werkzeugmaschine kann so ausgestaltet sein, dass die ersten Abschnitte und die zweiten Abschnitte der Hohlraumstrukturen einen geschlossenen Kreislauf bilden können, der vollständig innerhalb des Maschinengestells angeordnet sein kann.

Die vollständige Anordnung des genannten Kreislaufs innerhalb des Maschinengestells führt zu einer weiteren Reduktion der Temperaturdifferenzen im Maschinengestell, da sämtliche Abschnitte des geschlossenen Kreislaufs innerhalb des Maschinengestells geführt werden und somit die Umwelteinflüsse auf den Kreislauf reduziert werden können. Durch diese Ausgestaltung wird zudem vermieden externe Verbindungsleitungen zum Transport des Kühlmittels vorsehen zu müssen. Da die gesamten Hohlraumstrukturen innerhalb des Maschinengestells angeordnet sind, wird die Effizienz der passiven Umlauftemperierung der Werkzeugmaschine weiter erhöht. Der Temperaturabgleich findet zudem lediglich über das Maschinengestell, ohne Verwendung einer Kältemaschine, statt. Da keine Kältemaschine eingesetzt werden muss, können die Kosten zur Vermeidung von technisch bedingten Bearbeitungsungenauigkeiten der Werkzeugmaschine verringert werden.

Eine vorteilhafte Ausgestaltung der Werkzeugmaschine umfasst Hohlraumstrukturen, die zumindest teilweise von einer Rippenstruktur des Maschinengestells gebildet werden. Da Maschinengestelle üblicherweise standartmäßig eine Rippenstruktur aufweisen, können die vorhandenen Hohlraumstrukturen dieser Rippenstruktur für die Ausbildung der oben genannten Hohlraumstrukturen zur Führung des Kühlmediums genutzt werden. Somit können bereits vorhandene Strukturen des Maschinengestells mehrere Funktionen übernehmen und dadurch eine kostengünstige passive Umlauftemperierung der Werkzeugmaschine ausbilden. Dadurch kann zudem die Anzahl der benötigten Bauteile reduziert werden und zusätzliche Bohrungen können vermieden werden was wiederrum effizient und kostengünstig ist.

Die Werkzeugmaschine kann ein Kühlmedium aufnehmen, das ausschließlich über das Maschinengestell temperiert werden kann. Da das Kühlmedium ausschließlich infolge des Wärmetransports von den ersten Abschnitten zu den zweiten Abschnitten über das Maschinengestell temperiert werden kann, ist es möglich eine kostengünstige passive Umlauftemperierung einer Werkzeugmaschine auszubilden. Demnach benötigt die vorliegende Temperierung keine aktiven Kühlgeräte, welche aufwändig und teuer das Kühlmedium aktiv runterkühlen. Zudem ist es dadurch möglich, die Temperaturdifferenzen im Maschinengestell zu reduzieren, da die ansonsten ungenutzten Bereiche des Maschinengestells auch für die Temperierung verwendet werden können.

Die Werkzeugmaschine kann als Portalmaschine ausgestaltet sein. Dabei kann das Maschinengestell aus einem Maschinenbett und einem Ständer bestehen. Die wärmeerzeugenden Funktionskomponenten können aus einem Antrieb und Führungen bestehen und die ersten und zweiten Abschnitte können sowohl im Ständer als auch im Maschinenbett angeordnet sein.

Durch die Anordnung der ersten und zweiten Abschnitte im Ständer als auch im Maschinenbett ist eine effektive Reduktion der Temperaturdifferenzen möglich. Die Verformungen an der ungleichmäßig erwärmten Werkzeugmaschine können durch die Temperierung des Ständers und gleichzeitig auch des Maschinenbetts weiter reduziert werden. Zudem kann auch die Wärme der Führungen abgeführt werden.

Die ersten Abschnitte der Hohlraumstrukturen können über Durchgangsbohrungen mit den zweiten Abschnitten der Hohlraumstrukturen verbunden sein und die Öffnungen der Durchgangsbohrungen können an den Außenflächen des Maschinengestells mit Deckeln verschlossen sein. Bevorzugt sind diese Deckel lösbar ausgeführt, sodass zu Wartungszwecken ein besonders einfacher Zugang zu den Kühlkanälen durch Demontage der lösbaren Deckel ermöglicht wird. In einem besonders vorteilhaften Ausführungsbeispiel sind die Deckel teilweise oder vollständig transparent ausgestaltet, durch Verwendung von z.B. Glas oder transparenten Kunststoffen, sodass die regelmäßige Überprüfung der Kühlkanäle auf Verkalkung oder Verschmutzung ohne Demontage der Deckel auskommt.

Durch das Vorsehen von Durchgangsbohrungen zum Verbinden der Hohlraumstrukturen ist es möglich einen kostengünstigen und einfachen Kühlmittelkreislauf auszubilden, da die Durchgangsbohrungen mehrere Hohlraumstrukturen gleichzeitig miteinander verbinden können und somit die Anzahl der Bohrungen reduziert werden kann. Offene Enden der Durchgangsbohrungen können in einfacher Weise mit Deckeln verschlossen werden, damit kein Kühlmittel austritt. Diese Deckel können auch abnehmbar ausgestaltet sein, sodass eine einfache Wartung der Hohlraumstrukturen ermöglicht wird.

Die Werkzeugmaschine kann ein Maschinenbett und einen Ständer mit Hohlraumstrukturen aufweisen, und diese Hohlraumstrukturen können derart miteinander in Verbindung stehen, dass das Kühlmedium zum Ausgleich von Temperaturdifferenzen durch die Hohlraumstrukturen des Ständers und des Maschinenbetts fließen kann. Durch diese Ausgestaltung ist eine weitere Reduktion der Temperaturdifferenzen möglich, denn das Kühlmedium kann von den Hohlraumstrukturen des Ständers in die Hohlraumstrukturen des Maschinenbetts fließen und somit einen gemeinsamen Kreislauf ausbilden.

Dadurch ist es möglich, das gesamte Kühlmedium mit nur einer Pumpe umzuwälzen. In einem besonderen Ausführungsbeispiel können das Maschinenbett und/oder der Ständer aus Mineralguss bestehen, sodass eine besonders hohe Dämpfung und eine hohe Temperaturstabilität erreicht werden können. Bei Verwendung von Mineralguss können die auftretenden Schwingungen im Betrieb der Werkzeugmaschine 6-10-mal schneller gedämpft werden als bei Grauguss.

Das Maschinengestell der Werkzeugmaschine kann aus Grauguss bestehen. Der Grauguss kann zudem eine hohe Wärmeleitfähigkeit, von Beispielsweise 30 bis 60 W/(m . K), aufweisen. Durch die Verwendung von Grauguss mit hoher Wärmeleitfähigkeit wird die Effizienz der passiven Umlauftemperierung der Werkzeugmaschine weiter erhöht. Die Verwendung von Gussstücken ermöglicht zudem eine einfache Integration der Hohlraumstrukturen in die ohnehin vorzusehenden Gusskerne. Die Durchbrüche der Gusskerne können zudem als Verbindung zwischen den verschiedenen Hohlraumstrukturen vorgesehen sein. Somit wird ein weiterer Synergieeffekt erzielt und die ohnehin vorzusehenden Durchbrüche der Kernmarken (Kernlagerung) bei der Herstellung von Gusstücken werden als Verbindungskanäle der Hohlraumstrukturen genutzt. Dies führt zu einer weiteren Kostenreduktion und Effizienzsteigerung der passiven Umlauftemperierung der Werkzeugmaschine.

Die Werkzeugmaschine kann Hohlraumstrukturen aufweisen, die zumindest teilweise als Kühlkanäle mit kreisrunden und/oder elliptischen Querschnitten ausgebildet sind. Die Verwendung von kreisrunden oder elliptischen Querschnitten (statt z. B. quadratischen Querschnitten) erleichtert die Bewegung beziehungsweise den Fluss des Kühlmediums innerhalb der Kühlkanäle. Zudem werden dadurch die Anzahl der Kanten in den Kühlkanälen reduziert, wodurch auch die Anzahl der Stellen im Kühlkreislauf, an denen sich Ablagerungen bilden können, reduziert werden kann. Die Verwendung von kreisrunden oder elliptischen Querschnitten kann zudem die strukturelle Festigkeit, insbesondere die Torsionssteifigkeit, des Maschinengestells erhöhen.

Die Werkzeugmaschine kann Hohlraumstrukturen aufweisen, die beschichtet sind. Durch die Beschichtung der Hohlraumstrukturen kann die Korrosion und Algenbildung reduziert werden. Bevorzugt kann die Innenbeschichtung der Hohlraumstrukturen auf einer chemisch Nickel Beschichtung basieren. Zudem kann die Beschichtung auch über thermisches Spritzen mit Hilfe von z.B. atmosphärischen Plasmaspritzen oder Elektrolichtbogenspritzen zur Erreichung einer störungsfreien Schicht aufgebracht werden. Durch die niedrige Schichtporosität beim thermischen Spritzen sind vorteilhafte Oberflächenrauhigkeiten und dünne Schichtdicken erreichbar. Eine Schutzschicht der beschichteten Hohlraumstrukturen liegt im Bereich von 0,05 bis 1 mm, bevorzugt zwischen 0,1 und 0,2mm, und hat einen Rauheitswert Ra von 0,01-5µm und bevorzugt 0,03-0,09µm. Es können auch mehrere Schichten übereinander vorliegen. Durch die glatte Oberfläche wird der Kühlmittelfluss in den Hohlraumstrukturen stark erleichtert.

Die Werkzeugmaschine kann mit einem Prozesskühlmittel zusätzlich zum genannten Kühlmedium betrieben werden. Die Temperatur des Prozesskühlmittels zur unmittelbaren Kühlung des Arbeitsprozesses kann an die Temperatur des Kühlmediums über einen Wärmetauscher angepasst werden. Durch die Anpassung der Temperaturen wird eine weitere Reduktion der Temperaturdifferenzen ermöglicht.

Die Werkzeugmaschine kann zudem einen Wärmetauscher, der als Plattenwärmetauscher ausgeführt ist, aufweisen. Ein Plattenwärmetauscher ermöglicht einen flachen und platzsparenden Einbau in der Werkzeugmaschine.

Eine Pumpe zum Einstellen des Volumenstroms des Kühlmediums innerhalb der Hohlraumstrukturen kann vorgesehen sein, und die Leistung der Pumpe und der Querschnitt der Hohlraumstrukturen können so ausgelegt sein, dass die maximale Temperaturdifferenz des Kühlmediums innerhalb des Maschinengestells zwischen den ersten Abschnitten und den zweiten Abschnitten im Arbeitsbetrieb auf unter 5°C, vorzugsweise unter 2°C, begrenzt wird.

Die inneren Oberflächen der Hohlräume können so bemessen werden, dass die maximale Temperaturdifferenz des langsam umgewälzten (zum Beispiel Umwälzgeschwindigkeit kleiner 40 l/min) Kühlmediums in den ersten und zweiten Abschnitten unter 2° C liegt. Demnach können abhängig von der maximalen Wärme der wärmeerzeugenden Funktionskomponenten, die Innenflächen der Hohlräume so gestaltet werden, dass eine gleichmäßige Temperaturverteilung im Betrieb der Werkzeugmaschine gewährleistet werden kann.

In einer besonderen Ausführungsform ist das Verhältnis zwischen dem Volumen der Hohlraumstrukturen (dem sogenannten Hohlvolumen) zur Aufnahme des Kühlmediums zum Volumen des jeweiligen Gestellbauteils (Raumvolumen) in dem sich die jeweiligen Hohlraumstrukturen befinden, bevorzugt in einem Bereich von 2:1 bis 1:3 (Gestellbauteilvolumen zu Hohlraumstrukturvolumen des jeweiligen Gestellbauteils). Somit ist das jeweilige Hohlraumstrukturvolumen zumindest doppelt so groß wie das Volumen des Gestellbauteils. Dadurch dass die Hohlraumstrukturen zumindest das Doppelte vom Volumen des Maschinengestells aufweisen, ist es möglich den internen Wärmetransport im Maschinengestell zu steigern, ohne dabei die Umwälzgeschwindigkeit des Kühlmediums erhöhen zu müssen. Somit wird dadurch die Temperaturdifferenz im Bauteil weiter reduziert ohne dabei die Pumpenleistung erhöhen zu müssen.

Die Werkzeugmaschine kann als wärmeerzeugende Funktionskomponente zusätzlich zu den Führungen und Antrieben, ein Getriebe umfassen. Bei der Einbeziehung des Getriebes in die wärmeerzeugenden Funktionskomponenten und der damit verbundenen Wärmeabfuhr, kann bei Maschinen mit Getriebe auch die Wärme des Getriebes abgeführt werden und somit eine weitere Reduktion der Temperaturdifferenzen im Maschinengestell erreicht werden.

Die Hohlraumstrukturen des Maschinenbetts können parallel unter den Führungen angeordnet sein und der Ständer kann lediglich zweite Bereiche aufweisen. Die Anordnung der Hohlraumstrukturen direkt und parallel unter dem Maschinenbett, und gleichzeitig das ausschließliche Vorsehen von zweiten Bereichen im Ständer, führt zu einer wirkungsvollen Wärmeabfuhr aus dem Maschinenbett in den kalten Ständer.

Ein Verfahren zum Temperieren des Maschinengestells einer Werkzeugmaschine mit im Arbeitsbetrieb wärmeerzeugenden Funktionskomponenten, die an dem Maschinengestell angeordnet sind, das Hohlraumstrukturen aufweist, die einen Umwälzkreislauf ausbilden, in dem ein Kühlmedium umgewälzt wird. Das Verfahren umfasst die Schritte, Umwälzen des Kühlmediums im Umwälzkreislauf von den ersten Abschnitten in die zweiten Abschnitte und zurück, und Aufnehmen der Wärme durch das Kühlmedium in den ersten Abschnitten und Abgeben der Wärme in den zweiten Abschnitten, wobei das Kühlmedium die Wärme ausschließlich im Maschinengestell verteilen kann. Dadurch ist es möglich, eine effiziente Temperierung des Werkzeugmaschinengestells zu erreichen, ohne eine Kältemaschine zu nutzen.
Dabei kann das Verfahren die zusätzlichen Schritte aufweisen, Zirkulation des Kühlmediums zum Ausgleich von Temperaturdifferenzen von Hohlraumstrukturen des Ständers in die des Maschinenbetts und zurück bzw. umgekehrt. Dadurch ist es möglich eine effiziente Temperierung des Werkzeugmaschinengestells zu erreichen.
Das Verfahren kann die Schritte aufweisen, dass das Kühlmedium durch die ersten Abschnitte der ersten Bereiche der Hohlraumstrukturen eines Maschinenbetts des Maschinengestells gepumpt wird, und dass das Kühlmedium in die zweiten Abschnitte der zweiten Bereiche der Hohlraumstrukturen eines Ständers des Maschinenportals der Werkzeugmaschine gepumpt wird und zurück, und dass in einem weiteren Schritt das Kühlmedium in erste Abschnitte der Hohlraumstrukturen eines Querbalkens des Maschinenportals gepumpt wird und danach zurück in die zweiten Abschnitte der Hohlraumstrukturen des Ständer des Maschinenportals. Dadurch ist es möglich eine effektive Temperierung des Werkzeugmaschinengestells zu erreichen, da die Temperaturdifferenzen weiter reduziert werden können.
Durch das Anpassen der Temperatur eines Prozess-Kühlmittels, welches den bearbeiteten Bereich des Werkstücks während des Arbeitsprozesses direkt kühlen kann, an die Temperatur des Kühlmediums, über einen Wärmetauscher ist es möglich, eine noch effizientere Temperierung des Werkzeugmaschinengestells zu erreichen, da die Temperaturdifferenzen weiter reduziert werden können.

Das Verfahren kann die Schritte aufweisen, Zirkulation des Kühlmediums von Hohlraumstrukturen eines Ständers in die Hohlraumstrukturen des Maschinenbetts und zurück, und/oder Zirkulation des Kühlmediums von Hohlraumstrukturen des Ständers in Hohlraumstrukturen eines Querbalkens und zurück. Dadurch ist es möglich eine effiziente Temperierung des Werkzeugmaschinengestells zu erreichen, da die Temperaturdifferenzen weiter reduziert werden können.

Die Werkzeugmaschine kann zudem Temperatursensoren umfassen. Die Temperatursensoren können in den ersten und zweiten Bereichen des Maschinengestells angeordnet sein, sodass der Temperaturunterschied zwischen den Bereichen überwacht werden kann und eine Regelung des Volumenstroms des Kühlmittels in Abhängigkeit der gemessenen Temperatur möglich ist. Der Volumenstrom kann über die Pumpe so geregelt werden, dass abhängig von der eingetragenen Wärme der Funktionskomponenten der maximale Temperaturgradient im Maschinengestell (von 5°C und bevorzugt 3 °C und am meisten bevorzugt 2 °C) erreichbar ist, wobei der Temperaturgradient auf Basis der gemessenen Temperaturen in den ersten und zweiten Bereichen ermittelt wird, sodass die Verformung des Maschinengestells sehr präzise reduziert werden kann. Alternativ oder zusätzlich ist es möglich, über Dehnmessstreifen die Verformung des Gestells zu messen, und basierend auf der gemessenen Verformung (insbesondere der ungleichmäßige Verformung) den Volumenstrom zu regeln und dadurch die ungleichmäßige Verformung auf das gewünschte Maß zu reduzieren.

Vorteilhafte Ausgestaltungen und weitere Details der vorliegenden Erfindung werden im Folgenden anhand verschiedener Ausführungsbeispiele mit Bezug auf schematische Figuren beschrieben. In den schematischen Figuren wird die passive Umlauftemperierung der Werkzeugmaschine näher erläutert.
Fig. 1: zeigt einen gleichmäßig erwärmten Schlitten der Werkzeugmaschine.
Fig. 2: zeigt einen ungleichmäßig erwärmten Schlitten der Werkzeugmaschine.
Fig. 3: zeigt einen ungleichmäßig erwärmten Schlitten auf den Führungen des Maschinenbetts.
Fig. 4: zeigt die Bewegung des ungleichmäßig erwärmten Schlittens entlang der Führungen.
Fig. 5: zeigt eine Werkzeugmaschine mit ungleichmäßig erwärmten Werkzeugmaschinenbaugruppen.
Fig. 6: zeigt die Verlagerung von Messpunkten bezogen auf den Achsweg in Abhängigkeit der Zeit.
Fig. 7a: zeigt eine Portalmaschine mit mehreren Schlitten.
Fig. 7b: zeigt einen vergrößerten Ausschnitt des Gestells der Portalmaschine.
Fig. 8a: zeigt die Lage des Schnitts A-A durch den Ständer der Portalmaschine.
Fig. 8b: zeigt den Schnitt A-A.
Fig. 9a: zeigt die Lage des Schnitts B-B an der Portalmaschine.
Fig. 9b: zeigt den Schnitt B-B.
Fig. 10: zeigt den Verlauf des Kühlmediums durch die gesamte Maschine.

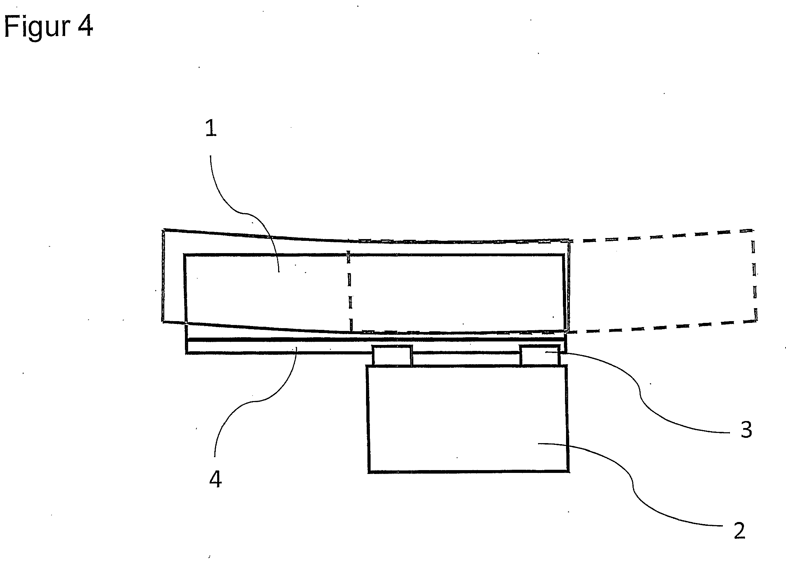

Zur Verdeutlichung der Auswirkungen ungleichmäßig erwärmter Bauteile der Werkzeugmaschine ist in Figur 4 die schematische Bewegung des ungleichmäßig erwärmten Schlittens 1 entlang der Führungen 3 dargestellt. Der ungleichmäßig erwärmte Schlitten 1 führt keine gradlinige Bewegung mehr aus, sondern fährt einen Bogen. Die strichlierte Stellung des Schlittens 1 in Figur 4 stellt die zweite maximale Auslenkungsposition des Schlittens 1 dar, während die durch durchgezogene Linien dargestellte Illustration des Schlittens 1 den ungleichmäßig verformten Werkzeugschlitten in einer anderen maximalen Position darstellt. Der nicht erwärmte Schlitten 1 ist in Figur 4 zum Vergleich in seiner Ausgangsposition dargestellt. Insbesondere anhand der äußeren Kanten des erwähnten Schlittens in den verschiedenen Maximalpositionen, ist die Auswirkung der ungleichmäßigen Erwärmung des Schlittens 1 auf die erzielbare Bewegungsgenauigkeit des Schlittens gut zu erkennen. Es liegt somit eine starke Abhängigkeit der Bewegungsgenauigkeit des Schlittens 1 von der vorliegenden Temperaturdifferenz vor.

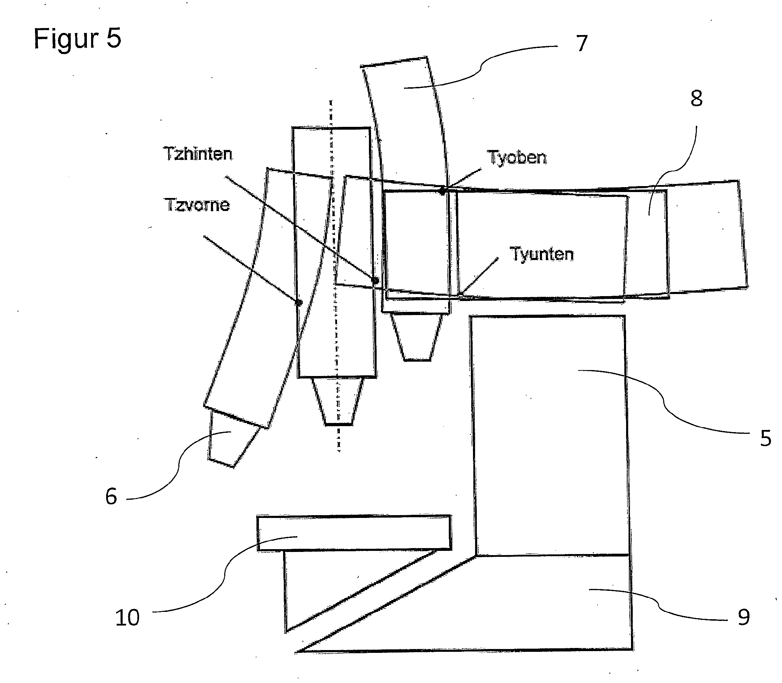

In Figur 5 ist ein Beispiel der Verformungen einer ungleichmäßig erwärmten Werkzeugmaschine dargestellt. Dabei sind nicht nur die Verformungen eines, sondern zweier ungleichmäßig erwärmter Bauteile der Werkzeugmaschine in Figur 5 dargestellt, nämlich des Spindelkastens 7 und des Längsschlittens 8.Die vorliegende Erfindung ist hier jedoch nicht auf die in Figur 5 dargestellte Maschine beschränkt, sondern kann auf beliebige Werkzeugmaschinen wie zum Beispiel Drehmaschinen, Ziehmaschinen, mechanische Pressen, Fertigungsmaschinen und Werkzeugmaschinen mit Mehrspindel oder Mehrschlittenausgestaltungen angewendet werden. Dabei ist sowohl eine Trockenbearbeitung als auch eine Nassbearbeitung möglich.

Die in Figur 5 dargestellte Maschine umfasst einen Ständer 5, der den Längsschlitten 8 trägt und auf dem Maschinenfuß 9 angeordnet ist. Der Maschinentisch 10, auf dem ein Werkstück platziert werden kann, ist über eine schräge Führung mit dem Maschinenfuß 9 verbunden. Der Spindelkasten 7 mit der Spindel 6 ist an der vertikalen Führung des Längsschlittens 8 geführt. In Figur 5 ist einerseits die Grundstellung der Werkzeugmaschine im kalten Zustand dargestellt. In der Grundstellung ist weder der Spindelkasten 7 noch der Längsschlitten 8 verformt. Diese stehen in der Grundstellung rechtwinklig aufeinander. Bei einer ungleichmäßigen Erwärmung des Spindelkastens 7 mit der Spindel 6 und dem Längsschlitten 8, wird eine ungleichmäßige Verformung dieser Bauteile bewirkt. Die Verformungen der Bauteile addieren sich. Dies führt zu einer bogenartigen Verformung, wie sie in Figur 5 dargestellt ist. Die Verformungen der erwähnten Baugruppen der Werkzeugmaschine sind in Figur 5 jedoch zur Verdeutlichung übertrieben dargestellt.

Die Auswirkungen der ungleichmäßigen Erwärmung der Baugruppen der Maschinen werden vor allem in den Extrempositionen der Werkzeugmaschine ersichtlich. Zu diesem Zweck sind in Figur 5 einerseits die erste und andererseits eine zweite Maximalposition dargestellt. In der ersten Maximalposition der Werkzeugmaschine, ist der Längsschlitten 8 maximal in Richtung Maschinentisch 10 ausgefahren und der Spindelkasten 7 entlang der vertikalen Führung maximal in Richtung des Maschinentischs 10 heruntergefahren. Die ungleichmäßigen Verformungen des Längsschlittens 8 und des Spindelkastens 7 addieren sich. Die zweite Maximalposition entspricht der oberen Maximalposition. Diese Position ist charakterisiert dadurch, dass der Längsschlitten 8 maximal eingefahren ist, in Richtung des Ständers 5, und der Spindelkasten 7 entlang der vertikalen Führung in seiner obersten Stellung steht. In dieser oberen Maximalposition addieren sich die Verformungen des Längsschlittens 8 und des Spindelkastens 7 jedoch nur zu einem sehr kleinen Teil.

Insbesondere bei Maschinen mit großen Auskragungen, das heißt weiten Verfahrenswegen, ergeben sich durch die oben beschriebenen Effekte große Wärmegänge, die einen großen Teil der Ungenauigkeiten ausmachen, die am Werkstück zurückbleiben.

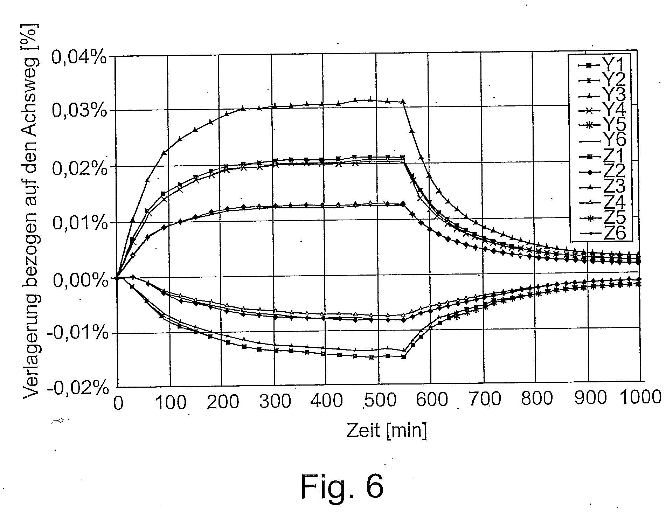

Figur 6 zeigt die durch Messungen ermittelten Anteile an der Abweichung an der Werkzeugspitze. Dabei sind die Abweichungen auf dem Arbeitsweg der Maschine normiert. Zwar liegt die bemessene Verlagerung nur zwischen -0,15 und 0,3 ‰, bei 500 mm Arbeitsweg sind das aber immerhin ca. -100 bis 150 µm.

Die beschriebenen Effekte nehmen natürlich mit der Dynamik der Werkzeugmaschine zu, da die Reibung in den Antriebs- und Führungselementen und die daraus folgende Erwärmung mit der Beschleunigung, und vor allem mit der maximalen Geschwindigkeit, zunimmt. Da seit langer Zeit versucht wird, die Haupt- und Nebenzeiten, und somit die Stückkosten der spannenden Bearbeitung zu senken, indem die Dynamik der Maschinenachsen gesteigert wird, nehmen die beschriebenen Effekte mit jeder Maschinengeneration automatisch zu. Dabei gilt generell, dass größer werdende Auskragungen zu größer werdenden Verlagerungen führen. Somit stellt die Ausbildung von Temperaturdifferenzen in einer Bearbeitungsmaschine den größten Teil der thermischen Verlagerung dar. Dabei spielt die Höhe des Temperaturniveaus nur eine untergeordnete Rolle. Die Vorrausetzung für höchste Verarbeitungsgenauigkeit hat nicht nur eine Maschine deren Bauteile eine bestimmte genau eingestellte Temperatur aufweisen, sondern einfach nur eine Maschine deren Bauteile und Werkstücke ein gleiches Temperaturniveau aufweisen.

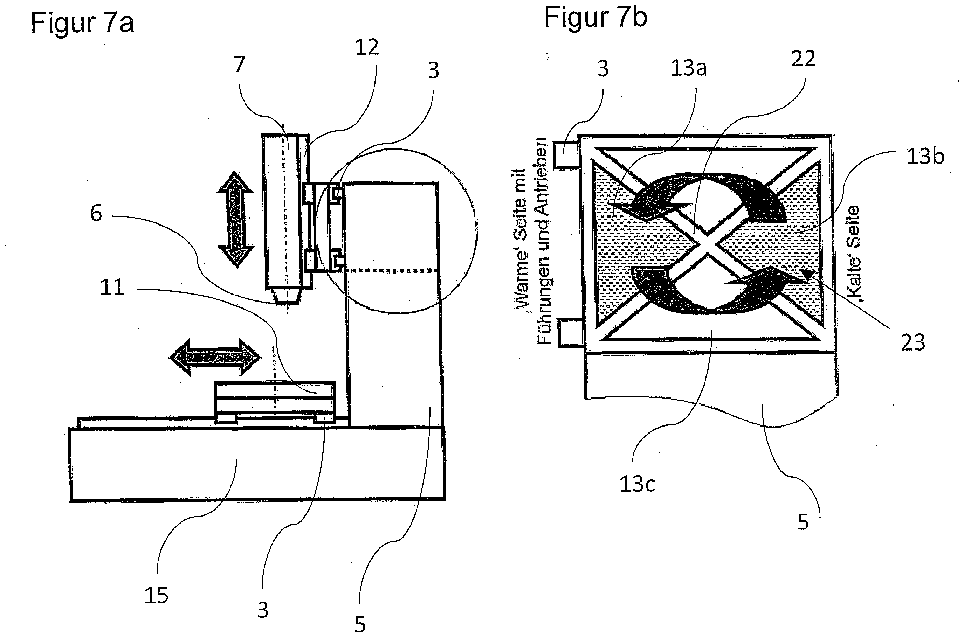

Figur 7a und Figur 7b stellen eine erste Ausführungsform der vorliegenden Erfindung dar. In den Gestellbauteilen der Werkzeugmaschine werden dabei Hohlräume geschaffen. Bei Gussbauteilen wird dies durch entsprechende Gestaltung der Verrippung erzielt. Die Hohlräume werden so angeordnet, dass sie zum einen auf der Seite des Gestellbauteils angeordnet sind auf der sich die Führungs- und Antriebselemente befinden, und andererseits auf der jeweils gegenüberliegenden Seite des Gestellbauteils auf der keine Wärme eingekoppelt wird. Gegebenenfalls können die Hohlräume so gestaltet werden, dass ein Hohlraum eine Verbindung sowohl zur Antriebsseite wie auch zur gegenüberliegenden Seite besitzt. Alle Hohlräume werden mit einem Fluid gefüllt das eine hohe Wärmekapazität und eine gute Wärmeleitfähigkeit besitzt. Dieses Fluid wird mit einer geringen Geschwindigkeit umgewälzt und durch die Umwälzung des Fluids werden Temperaturunterschiede in dem Gestellbauteil ausgeglichen. Dadurch unterbleibt die oben genannte Verbiegung zu der es infolge von Temperaturunterschieden an den Gestellbauteilen kommt. Werden mehrere Gestellbauteile entsprechend ausgeprägt, können die Hohlräume miteinander verbunden werden und das Fluid durch alle Hohlräume mit nur einer Pumpe umgewälzt werden. Dies stellt eine einfache Lösung zur Ausgleichung von Temperaturunterschieden im Gestell der Werkzeugmaschine dar und vermeidet zudem die Entstehung des Großteils der thermischen Verlagerungen zu denen es an Werkzeugmaschinen kommt. Bevorzugt besteht dabei das Maschinengestell der Werkzeugmaschine aus Grauguss, wobei man dabei unter dem Maschinengestell die Summe aller tragenden Teile der Maschine verstehen kann. Die Hohlräume weisen zudem einen großen Querschnitt auf um eine große Menge an Kühlfluid aufzunehmen welches dann lediglich langsam um gewälzt wird. Die Umlaufmenge liegt vorzugsweise zum Beispiel im Bereich bei 5 bis 50 Liter/Minute (bevorzugt 10 bis 40Liter/Minute), um die entstandene Wärmeleitung des Werkzeugmaschine aufzunehmen und somit eine besonders gleichmäßige Temperierung des Maschinengestells zu Gewährleisten und dabei gleichzeitig die Pumpenleistung möglichst gering zu halten. Eine 3-achsige Maschine mit 30kW Anschlußleistung muss in etwa eine Wärmeleistung zwischen 2 und 6kW in die Umlaufkühlung abgeben, damit sich das Kühlmittel auf der "warmen" Seite der Maschine nicht zu stark erwärmt. Pro kW installierter Antriebsleistung werden also ca. 50 bis 150 W Wärmeleistung in die Maschinenstruktur eingekoppelt. Dies lässt sich vorliegend alleine durch den internen Wärmeausgleich im Gestell der Werkzeugmaschine erreichen.

Die in Figur 7a dargestellte Werkzeugmaschine umfasst Führungen 3, einen Ständer 5 sowie mehrere Schlitten. Einerseits ist ein Schlitten für die Bewegung entlang der vertikalen Achse dargestellt, Z-Schlitten 12 und andererseits ein Schlitten zur Bewegung entlang der horizontalen Achse, X-Schlitten 11. Die Spindel 6 ist am Spindelkasten 7 angeordnet welcher über dem Z-Schlitten 12 und den Führungen 3 am Ständer 5 geführt wird. Der X-Schlitten 11 wird über Führungen 3 entlang dem Maschinenbett 15 geführt. Die Hohlraumstrukturen sind bevorzugt direkt im Gestell bei den Verbindungsseiten zu den Führungs- und Antriebselementen der Werkzeugmaschine angeordnet, um die entstehende Wärme dort direkt aufzunehmen.

Der Erfindung zugrunde liegende Ansatz besteht darin, die Ausbildung von Temperaturdifferenzen an den Gestellbauteilen von Werkzeugmaschinen zu unterbinden ohne sie dabei mit großem technischen Aufwand auf eine bestimmte Temperatur zu bringen. Die dazu vorgesehenen Hohlräume 13a, 13b der Gestellbauteile sind zum Beispiel in Figur 7b dargestellt. Ein Teil dieser Hohlräume wird in der Nähe der Wärmequellen, also auf der warmen Seite der wärmeerzeugenden Funktionskomponenten, wie zum Beispiel Führungen oder Antriebe angebracht (Hohlräume mit ersten Abschnitten 13a), sodass sich zwischen dem hohlraumfüllenden Medium, das eine gute Wärmeleitung und eine hohe Wärmekapazität aufweist, und den Wärmequellen, ein Wärmefluss ergeben kann, durch den das Medium die Verlustwärme aus den Wärmquellen aufnimmt und somit sich selbst erwärmt. Der andere Teil der Hohlräume (Hohlräume mit zweiten Abschnitten 13b; kalte Seite) wird auf der den Wärmequellen abgewandten kalten Seite des Gestellbauteils angeordnet und ebenso mit einem Medium guter Wärmeleitung und hoher Wärmekapazität gefüllt. Zudem ist es möglich, dass einige Hohlräume kein Kühlmedium 23 aufnehmen, die sogenannten freien Hohlräume 13c. In einer weiteren Ausführungsform ist es auch möglich, dass die ersten und zweiten Abschnitte 13a, 13b der Hohlräume auch gemeinsam in einem Hohlraum vorliegen. Mit der vorliegenden Erfindung wird die Wärme von verschiedenen Bereichen des Werkzeugmaschinengestells ausgeglichen und dadurch stellt sich die Temperatur des Maschinengestells unabhängig von einer Kältemaschine ein. Das Kühlmedium wird somit nicht aktiv temperiert, sondern nur passiv durch die Durchströmung der Hohlräume des Maschinengestells, ohne diese zu verlassen. Das Kühlmedium verteilt daher die Wärme vollständig innerhalb des Maschinengestells. Besonders vorteilhaft ist dabei eine symmetrische Anordnung der Hohlräume auf der warmen Seite und der kalten Seite des Maschinengestells. Je weiter die "warmen" und "kalten" Hohlräume voneinander entfernt sind, desto besser ist die erreichte Temperaturausgleichswirkung im Gestell. Es werden vorliegend somit keine teuren Verdichter- oder Verdampfer-Kreisläufe benötigt, sodass das Kühlmedium ausschließlich vom Maschinengestell temperiert wird, bzw. das Kühlmedium ausschließlich Wärme über das Maschinengestell abgibt und/oder aufnimmt.

Zwischen diesen Hohlräumen mit den ersten und zweiten Abschnitten 13a, 13b wird das Medium beständig aber langsam umgewälzt, sodass die durch das Medium auf der warmen Seite aufgenommenen Wärme auf die kalte Seite verbracht wird und dort die umgebenden Teile des Gestellbauteils erwärmt. Dadurch werden die Temperaturdifferenzen zwischen der warmen und der kalten Seite ausgeglichen oder zumindest stark reduziert. Somit wird die Verbiegung des Maschinengestells ebenfalls vermieden oder stark verringert, was auch für die thermische Verlagerung gilt, die sich daraus ergibt.

Dabei wird der Effekt ausgenutzt, dass Guss- oder Schweißteile, die häufig für das Maschinengestell eingesetzt werden um die Gestellbauteile der Werkzeugmaschine zu bilden, ohnehin als verrippte Hohlkörper ausgebildet werden. Die gegebene Verrippung 22 (Rippenstruktur) wird angepasst, sodass sich die gewünschten Hohlräume zur Aufnahme des Kühlmediums 23 ergeben. Etwaige erforderliche Kernlöcher werden mit Deckeln verschlossen. Diese Deckel können auch abnehmbar gestaltet werden, sodass für den Fall von Wartungsarbeiten ein einfacher Zugang zu den Hohlräumen gewährleistet werden kann.

In Figur 7b ist der schematische Wärmeaustausch zwischen der warmen Seite mit den Führungen und Antrieben des Maschinengestells, und dem Ständer 5, mit der kalten Seite dargestellt. Die symbolisch dargestellten dunklen Pfeile sollen dabei die Kühlmittelzirkulation symbolisieren. In Figur 7b ist zudem die Verrippung 22 im Inneren des Maschinengestells dargestellt. Die Hohlräume nutzen dabei die natürliche Form der Verrippung 22 des Maschinengestells aus. Dadurch wird eine sehr einfache Möglichkeit zur Ausgestaltung und Anordnung der Hohlräume gewährleistet.

Die gegebene Verrippung 22 wird einerseits genutzt um im Gussteil die Hohlräume auszubilden und andererseits um die Versteifung und Steifigkeit der Gestellbauteile zu erhöhen. Die Hohlräume werden mit Wasser gefüllt. Das Wasser wird dabei zwischen den Hohlräumen umgewälzt, sodass ein Temperaturabgleich der verschiedenen Seiten des Gussteils erfolgt. Die Einbringung des Wassers in die Hohlräume des Maschinengestells bewirkt zudem eine dämpfende Wirkung des Maschinengestells, wodurch die Bearbeitungsgenauigkeit der Maschine weiter erhöht werden kann.

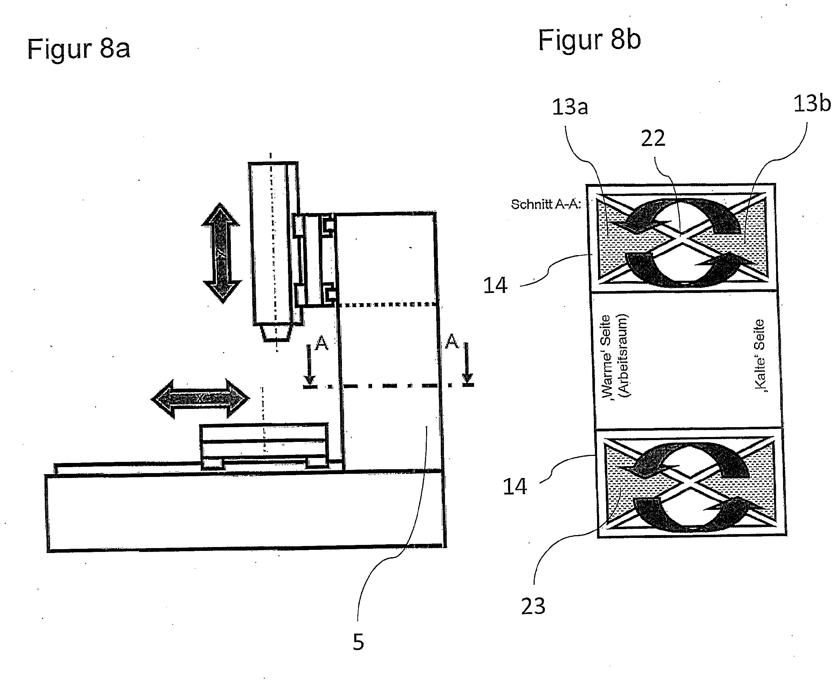

In Figur 8a ist die Schnittlinie A-A durch die Portalmaschine mit zwei Führungsschlitten dargestellt. In Figur 8b ist der Schnitt A-A gezeigt. Die zwei vertikalen Ständerbalken 14 der Portalmaschine enthalten dabei jeweils eigene Hohlräume. Die Temperierung beider Ständerbalken 14 bewirkt bei der Portalmaschine eine besonders hohe Bearbeitungsgenauigkeit, da eine Neigung des Querbalkens durch die gleichmäßige Erwärmung der Ständerbalken 14 gewährleistet wird. Eine weitere Erhöhung der Bearbeitungsgenauigkeit der Portalmaschine kann durch eine thermosymmetrische Konstruktion der Ständerbalken 14 und/oder des gesamten Maschinengestells erreicht werden. Dabei ist insbesondere eine thermosymmetrische Ausführung sämtlicher Führungen vorteilhaft.

Werden nichtmetallische Materialien zur Herstellung der Gestellbauteile eingesetzt, zum Beispiel Mineralguss, so werden entsprechende Kanäle in dem Guss eingebettet. Diese unterscheiden sich von den durchaus bekannten Lösungen zur Aktivkühlung von Mineralguss dadurch, dass große Querschnitte für die eingelegten Rohre gewählt werden, um einen guten Wärmeübergang zu erreichen. In diese großen Hohlräume wird dann ebenfalls ein nicht aktiv gekühltes Kühlmedium 23 eingefühlt, das langsam umgewälzt wird.

Eine besonders hohe Bearbeitungsgenauigkeit der Werkzeugmaschine kann erzielt werden, wenn alle Gestellbauteile der Werkzeugmaschine mit den Hohlräumen zur Führung des Kühlmittels versehen sind. Werden nun erfindungsgemäß viele der Gestellbauteile der Maschine mit diesen Hohlräumen versehen und das Medium nicht nur zwischen der warmen und der kalten Seite eines Bauteils umgewälzt, sondern zusätzlich noch zwischen den Hohlräumen der verschiedenen Gestellbauteile ausgetauscht, so kann die Ausbildung von Temperaturdifferenzen an der gesamten Werkzeugmaschine vermieden oder stark verringert werden. Das Kühlmedium wird durch alle Gestellbauteile hindurch in einem geschlossenen Kreislauf umgewälzt. Bei Vorhandensein einer Kühlmittelanlage kann das Kühlmedium mit einfachen Mitteln, zum Beispiel einem Wärmetauscher, auf die Temperatur des Prozesskühlmittels gebracht werden.

Der Volumenstrom (bevorzugt im Bereich von 40l/min.) bei der Temperierung durch Umwälzung des Kühlmediums durch die Werkzeugmaschine, oder durch die gesamte Maschine, muss so ausgelegt werden, dass die Einkoppelung des auf der warmen Seite entstehenden Wärmestroms nur zu einer minimalen Temperaturerhöhung von zum Beispiel unter 2° C im Medium und damit im Bauteil führt.

So kann abschätzend davon ausgegangen werden, dass pro linear-Führungsschuh eine Reibungskraft von einigen Dutzend bis einigen Hundert Newton überwunden werden muss. Diese Reibkraft hängt ab von der Baugröße des Führungsschuhs, von der Dichtung, der Vorspannung und der Belastung. Multipliziert mit der Verfahrgeschwindigkeit ergibt die Reibkraft die Reibleistung. Die Reibleistung für einen Führungsschuh liegt also bei einer 50 m/min. Abschätzung zwischen 50 W und 200 W.

Ein Antrieb wandelt etwa 35 % der elektrischen Leistung in Wärme um, von der wiederum in etwa die Hälfte in die Maschinenstruktur eingekoppelt wird. Pro Kilowatt installierter Antriebsleistung werden also ca. zwischen 50 und 150 W Wärmeleistung in die Maschinenstruktur eingekoppelt.

Für eine dreiachsige Maschine mit 30 kW Anschlussleistung ergibt sich so in etwa eine Wärmeleistung zwischen 2 und 6 kW, die die Umlaufkühlung aufnehmen muss, ohne dass das Kühlmittel auf der warmen Seite sich zu stark erwärmt. Diese Wärmeleistung kann mit einer Umlaufmänge von ca. 10 bis 40 l/min. Wasser abgeführt werden.

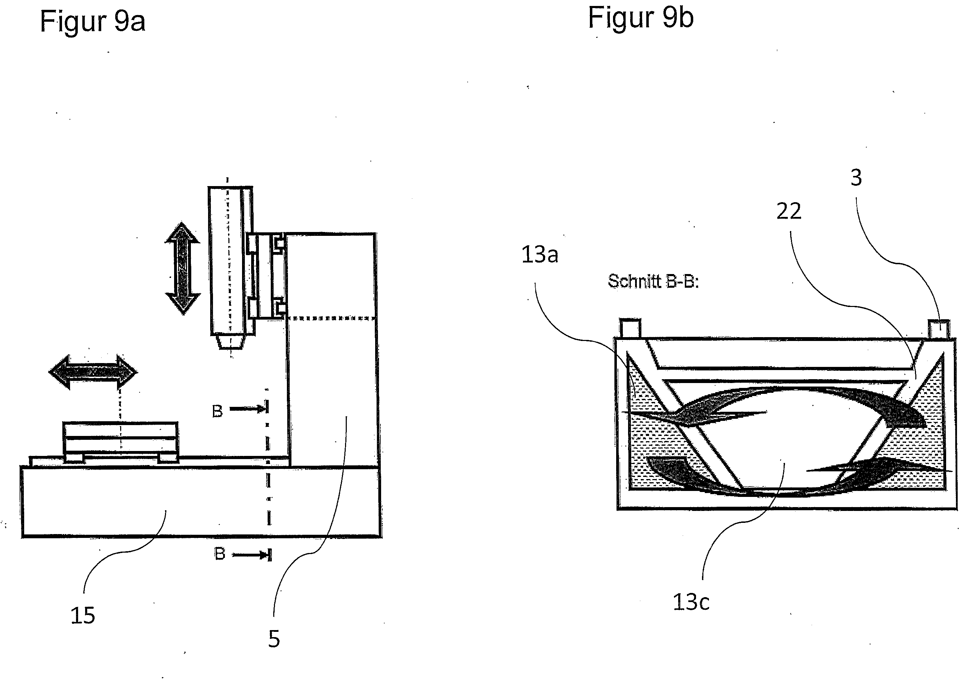

In Figur 9a ist der Verlauf des Schnitts B-B durch die Werkzeugmaschine dargestellt. In Figur 9b ist der Schnitt B-B dargestellt. Die Wärme, welche über die Führung 3 auf das Maschinenbett 15 einseitig übertragen wird, wird dabei über die Hohlräume entlang der schematisch dargestellten Kühlmittelflusspfeile in Figur 9b, mit der kalten Seite des Maschinenbetts 15 ausgeglichen. Die Hohlräume sind dabei so gewählt, dass sich eine ideale und gleichmäßige Erwärmung des Maschinenbetts 15 ergibt. Dieser ideale Temperaturabgleich wird vorliegend erreicht indem nur bestimmte Hohlräume des Maschinenbetts 15 für den Wärmeausgleich herangezogen werden. Der mittlere Hohlraum in Figur 9b wird somit nicht direkt mit Kühlmitteln beaufschlagt. Durch den in Figur 9b dargestellten Wärmeausgleich wird eine gleichmäßige Temperaturverteilung beziehungsweise eine gleichmäßige Temperatur der Oberseite und der Unterseite des Maschinenbetts erzielt.

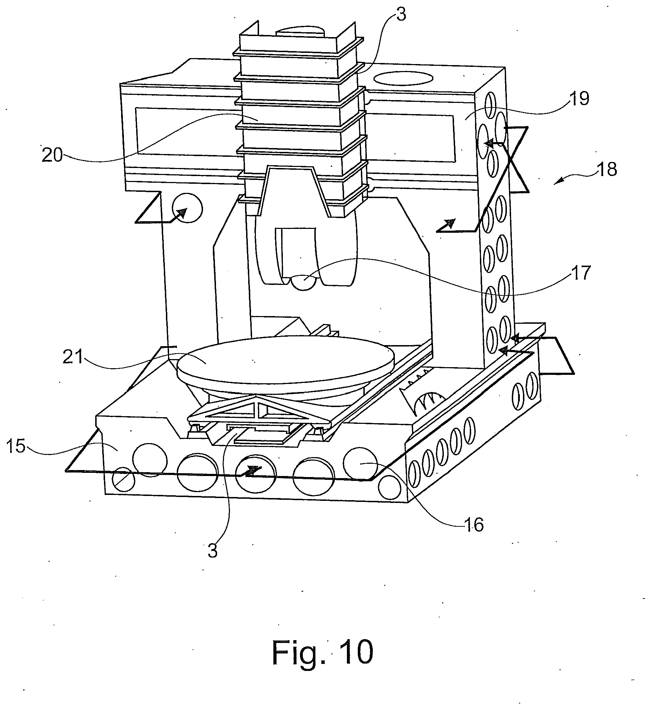

In Figur 10 ist eine Portalmaschine gezeigt, wobei die Temperierung durch Umwälzung des Kühlmediums 23 durch die gesamte Maschine erfolgt. Der Verlauf des Kühlmediums 23 in dem Maschinengestell ist schematisch mit Pfeilen dargestellt. Die Portalmaschine in Figur 10 umfasst Führungen 3, welche auf einem Maschinenbett 15 angeordnet sind. Der Maschinentisch 21 ist über die Führungen 3 mit dem Maschinenbett 15 verbunden. Die Hohlraumstrukturen 16 in Figur 10 sind als Kernbohrungen ausgestaltet. Diese Bohrungen sind teilweise als Durchgangsbohrungen ausgestaltet. Die gleichmäßige Anordnung der Hohlraumstrukturen 16 beziehungsweise der Bohrungen entlang des gesamten Maschinengestells führt zu einer möglichst gleichmäßigen Temperatur des gesamten Maschinengestells im Betrieb. Bevorzugt kann für die verschiedenen Bohrungen am Maschinengestell beziehungsweise an allen Baugruppen des Maschinengestells derselbe Kernquerschnitt des Bohrers, zum Beispiel im Bereich von 25 bis 140mm, verwendet werden, um einen möglichst effizienten Produktionsvorgang der Maschine zu gewährleisten. Besonders bevorzugt, sind die Hohlraumstrukturen 16 symmetrisch entlang der Bauteilachsen angeordnet, sodass sich eine besonders gleichmäßige Erwärmung der Werkzeugmaschine ergibt. Unter Bauteilachsen sind dabei die Achsen zu verstehen, entlang derer das eingespannte Bauteil entlang der Führungen bewegt werden kann, bzw. entlang derer das eingespannte Bauteil bearbeitet werden kann. Daher sind die Achsen von der Lage der Führungen und der Lage und Bewegungsrichtung der Antriebseinheiten abhängig.

Die Maschine in Figur 10 umfasst zusätzlich einen Querbalken 19, einen Support 20 und einen Fräskopf 17. Bei der Anordnung einer Pumpe zum Umwälzen des Kühlmediums in den Hohlräumen, kann die Form des Maschinenportals 18 beziehungsweise der Hohlraumstrukturen 16 mit in Erwägung gezogen werden. Dadurch kann die Umlaufpumpe so angeordnet werden, dass Konvektionsströmungen des Kühlmediums vorteilhaft ausgenutzt werden können.

Die Porttalmaschine in Figur 10 enthält mehrere Bohrungen, die mit der Rippenstruktur des Maschinengestells die Hohlraumstrukturen 16 ausbilden. An den rechten und linken Seitenflächen des Maschinenportals 18, an den Vertikalbalken des Ständers der Werkzeugmaschine, sind erste Kernbohrungen 24 und zweite Kernbohrungen 25 angeordnet, welche parallel zueinander ausgerichtet sind, sodass das durchgeführte Kühlmedium in besonders hohem Maße das Gestell durchfließen kann und dadurch ein hoher Wärmeausgleich erzielt werden kann. Die ersten Kernbohrungen 24 und zweiten Kernbohrungen 25 sind zudem parallel zur waagrechten Bauteilbearbeitungsachse der Werkzeugmaschine angeordnet. Die ersten Kernbohrungen 24 und zweiten Kernbohrungen 25 verlaufen von der linken zur rechten Seitenfläche des Maschinenportals 18, bzw. umgekehrt und sind somit parallel zur Grundfläche der Werkzeugmaschine bzw. auch parallel zum Querbalken 15. Die dritten Kernbohrungen 26 sind entlang der Achse der Arbeitsspindel bzw. entlang der Bewegungsachse des Supports 20 angeordnet, also in vertikaler Richtung der Werkzeugmaschine, da dadurch die erzeugte Wärme der Spindel besonders gut aufgenommen werden kann. Im Querbalken 19 des Maschinenportals 18 sind zudem zehnte Kernbohrungen 38 vorgesehen welche entlang bzw. parallel zu der Längsachse des Querbalkens 19 verlaufen. Von der Vorderseite zur Rückseite des Maschinenportals 18 sind horizontale neunte Kernbohrungen vorgesehen.

An den rechten und linken Seitenflächen des Maschinenbetts 15 sind vierte Kernbohrungen 27 und fünfte Kernbohrungen 28 angeordnet. Diese Kernbohrungen verlaufen horizontal durch das Maschinenbett 15, parallel zur Längsachse des Querbalkens 19. Die vierten Kernbohrungen 27, im dargestellten Ausführungsbeispiel sind fünf Bohrungen der vierten Kernbohrungen 27 gezeigt, sind in gleichmäßigen Abständen direkt unter (vertikal unter) den Führungen 3 des Maschinentischs 21 angeordnet um die erzeugte Wärme der Führungen 3 und des darauf installierten Bauteils (nicht gezeigt) aufzunehmen. Die achten Kernbohrungen 31 befinden sich im unteren rechten und linken Eckbereich des Maschinenbetts 15 und verlaufen horizontal, also parallel zur Grundfläche der Werkzeugmaschine. Die achten Kernbohrungen 31 sind geometrisch möglichst weit von den wärmeerzeugenden Funktionskomponenten, wie zum Beispiel Führungen oder Antriebe, der Werkzeugmaschine entfernt und bilden somit Kompensations- bzw. Abgleichbereiche des Maschinenbetts 15, sodass das umgewälzte Kühlmedium in diesen Bereichen die aufgenommene Wärme in kühlere Bereiche des Maschinenbetts abgeben kann. Bevorzugt sind die achten Kernbohrungen 31 stets in äußeren Eckbereichen der Bauteile des Werkzeugmaschinengestells angeordnet, um auch die kältesten Bereiche der Bauteile des Werkzeugmaschinengestells erreichen zu können und das Werkzeugmaschinengestell somit möglichst gleichmäßig erwärmen zu können.

Die sechsten Kernbohrungen 29 und siebten Kernbohrungen 30, 33 sind horizontal von der Vorderseite des Maschinenbetts 15 zur Rückseite des Maschinenbetts 15 (nicht dargestellt) geführt und somit parallel und in unmittelbarer Nähe zu den Führungen 3 des Maschinentischs 21 angeordnet. Die sechsten Kernbohrungen 29 sind dabei besonders groß ausgeführt, um möglichst effizient die Wärme der angrenzenden wärmeerzeugenden Funktionskomponenten aufzunehmen. Sämtliche Kernbohrungen verlaufen bevorzugt derart, dass diese sich stets im rechten Winkel schneiden, sodass eine einfache Herstellbarkeit der Bohrungen des Werkzeugmaschinengestells in wenigen Arbeitsschritten, ohne häufiges Umspannen der Gestellbauteile im Herstellungsprozess, gewährleistet ist.

Die horizontale Anordnung der Kernbohrungen hat den Vorteil, dass das Kühlmedium besonders leicht durch diese Bohrungen gepumpt werden kann. Die vorliegend als Kernbohrungen bezeichneten Bohrungen können auch als Durchgangsbohrungen oder als Sacklöcher ausgeführt sein. Anstatt Kernbohrungen sind auch Durchbrüche möglich. Bei Durchgangsbohrungen können an den Außenseiten der Durchgangsbohrung Gewinde vorgesehen werden, sodass die nötigen Verschlussdeckel einfach aufgeschraubt werden können und bei der Wartung der Hohlraumstrukturen 16 die Deckel einfach abgeschraubt werden können.

Über die Maschinenbettzufuhr 34 wird das Kühlmedium vom Ständer des Maschinenportals 18 direkt in die sechsten Kernbohrungen 29 zu den Bereichen mit dem höchsten Wärmeeintrag des Maschinenbetts 15 zugeführt. Diese Zufuhr kann durch interne oder externe Ausgleichsleitungen (angeordnet im Maschinengestell oder außerhalb) des Maschinengestells, welche in Figur 10 schematisch durch Flusspfeile des Kühlmediums dargestellt sind, durchgeführt werden. Die Kernbohrungen können auch so ausgestaltet sein, dass diese die Funktion der Ausgleichsleitungen übernehmen, sodass keine zusätzlichen Leitungen nötig sind. Über die erste Ständerzufuhr 37 wird das Kühlmedium vom Maschinenbett 15 dem Ständer des Maschinenportals zugeführt. Das im Maschinenbett erwärmte Kühlmedium gibt die Wärme im Ständer wieder ab und erwärmt diesen. Im nächsten Schritt wird das Kühlmedium nach der Wärmeabgabe über die Querbalkenzufuhr 36 den Hohlraumstrukturen 16 des Querbalkens zugeführt. Im Querbalken nimmt das Kühlmedium die Wärme der Führung 3 und des Supports 20 auf. Im nächsten Schritt wird das Kühlmedium über die zweite Ständerzufuhr 35 dem Ständer des Maschinenportals 18 zugeführt. Dort gibt das Kühlmedium die Wärme wiederrum ab, sodass im nächsten Schritt der Kreislauf wieder von vorne beginnen kann. Der Kreislauf kann natürlich auch umgekehrt betrieben werden. Das Umwälzen des Kühlmediums kann dabei über eine oder mehrere Pumpen bewirkt werden.

Sind diese Voraussetzungen gegeben, so besteht erfindungsgemäß die Möglichkeit mit einfachsten Mitteln die Temperierung der Maschinenbauteile zu erreichen. Es wird lediglich eine einfache dauernd umlaufende Umwälzpumpe benötigt. Eine komplizierte anfällige Regelung wird vermieden. Verdichter- und Verdampferkreisläufe, wie bei Aktivkühlern üblich, oder Wärmetauscher können zudem vermieden werden. Schließlich sollen die Maschinenbauteile nicht gekühlt werden, es soll vielmehr die Ausbildung von Temperaturdifferenzen an den Bauteilen vermieden werden.

Wird der Zerspanprozess mit Prozesskühlmitteln unterstützt, so ist es erfindungsgemäß sinnvoll, die Temperatur des Prozesskühlmittels mit der des Maschinenkühlmediums anzugleichen. Das kann auf kostengünstige und robuste Art und Weise durch den Einsatz eines kompakten Plattenwärmetauschers erreicht werden, der von beiden Medien durchströmt wird.

Die Gestellbauteile der Werkzeugmaschine umfassen Hohlräume mit einem im Vergleich zu den Abmessungen des Gestellbauteils nennenswerten großen Querschnitt und einer im Vergleich zur Oberfläche des Gestellbauteils nennenswerten großen Oberfläche, die ein nichtaktiv temperiertes Kühlmedium aufnehmen. Das Kühlmedium 23 wird zwischen diesen Hohlräumen umgewälzt, um die auf der Antriebsseite aufgenommene Wärmemenge auf die gegenüberliegende Seite des Gestellbauteils zu transportieren, sie dort abzugeben, sodass im Bauteil ein insgesamt höheres aber gleichmäßiges Temperaturniveau mit stark reduzierten Unterschieden mit Temperatur zwischen der Antriebsseite und der abgewandten Seite einstellt und die thermischen Verformungen, die zur Verbiegung der Gestellbauteile führen, unterbunden werden. Dabei kann die natürliche Rippenstruktur die metallische Guss- oder Schweißgestellbauteile aus Steifigkeitsgründen besitzen ausgenutzt werden, um die Hohlräume auszubilden. Wärmeerzeugende Funktionskomponenten deren Wärme abgeführt werden kann, sind zum Beispiel Motor, Getriebe, Führungen oder sonstige im Betrieb sich erwärmende Baugruppen.

## Patentansprüche

1. Werkzeugmaschine mit einem Maschinengestell, an dem Funktionskomponenten angeordnet sind, die im Arbeitsbetrieb Wärme erzeugen, und das Hohlraumstrukturen (16) zur Ausbildung eines Umwälzkreislaufs aufweist, in dem ein Kühlmedium (23) innerhalb des Maschinengestells umgewälzt wird, wobei
das Maschinengestell erste Bereiche aufweist, in denen die wärmeerzeugenden Funktionskomponenten angeordnet sind und zweite Bereiche, die von den ersten Bereichen beabstandet sind, sodass
der durch die Funktionskomponenten erzeugte Wärmeeintrag in den zweiten Bereichen geringer ist als in den ersten Bereichen, und die Hohlraumstrukturen (16) erste Abschnitte (13a) aufweisen, die in den ersten Bereichen angeordnet sind und zweite Abschnitte (13b) die in den zweiten Bereichen angeordnet sind, **wobei**
die im Maschinengestell befindlichen Hohlraumstrukturen (16) derart bemessen sind, dass beim Umwälzen des Kühlmediums (23) von den ersten Abschnitten (13a) in die zweiten Abschnitte (13b) die von den Funktionskomponenten eingetragene Wärme in die zweiten Bereiche abgeführt wird und auf diese Weise ein Temperaturabgleich zwischen den ersten und den zweiten Bereichen bewirkt wird, wobei eine Pumpe vorgesehen ist zum Umwälzen des Kühlmediums und die ersten Abschnitte (13a) und die zweiten Abschnitte (13b) der Hohlraumstrukturen einen geschlossenen Kreislauf bilden, der vollständig innerhalb des Maschinengestells angeordnet ist, sodass der Temperaturabgleich innerhalb des Maschinengestells stattfindet,
**dadurch gekennzeichnet, dass** die Hohlraumstrukturen (16) zur Ausbildung des Umwälzkreislaufs zumindest teilweise von Hohlräumen einer der Rippenstruktur (22) des Maschinengestells gebildet werden, und wobei die Hohlraumstrukturen über Durchgangsbohrungen miteinander verbunden sind.

2. Werkzeugmaschine nach Anspruch 1, **dadurch gekennzeichnet, dass** der Temperaturabgleich zwischen den ersten und den zweiten Bereichen lediglich über das Maschinengestell, ohne Verwendung einer Kältemaschine, stattfindet.

3. Werkzeugmaschine nach einem der vorhergehenden Ansprüche, **dadurch gekennzeichnet, dass** das Kühlmedium (23) ausschließlich infolge des Wärmeflusses über das Maschinengestell von den ersten Abschnitten (13a) zu den zweiten Abschnitten (13b) temperiert wird.

4. Werkzeugmaschine nach einem der vorhergehenden Ansprüche, **dadurch gekennzeichnet, dass** die Werkzeugmaschine als Portalmaschine ausgestaltet ist, das Maschinengestell aus einem Maschinenbett (15) und einem Ständer (5) besteht, und die wärmeerzeugenden Funktionskomponenten aus einem Antrieb und Führungen (3) bestehen und die ersten und zweiten Abschnitte (13a, 13b) im Maschinenbett (15) und/oder im Ständer (5) angeordnet sind.

5. Werkzeugmaschine nach Anspruch 1, **dadurch gekennzeichnet, dass** das Maschinengestell aus einem Maschinenbett (15) und einem Ständer (5) besteht, und das Maschinenbett (15) und der Ständer (5) Hohlraumstrukturen (16) aufweisen und diese Hohlraumstrukturen (16) derart miteinander in Verbindung stehen, dass das Kühlmedium (23) zum Ausgleich von Temperaturdifferenzen von den Hohlraumstrukturen (16) des Ständers (5) in die des Maschinenbetts (15) fließt und zurück bzw. umgekehrt.

6. Werkzeugmaschine nach einem der vorhergehenden Ansprüche, **dadurch gekennzeichnet, dass** die ersten Abschnitte (13a) der Hohlraumstrukturen (16) über Durchgangsbohrungen mit den zweiten Abschnitten (13b) der Hohlraumstrukturen (16) verbunden sind und die Öffnungen der Durchgangsbohrungen an den Außenflächen des Maschinengestells mit Deckeln verschlossen sind.

7. Werkzeugmaschine nach einem der vorhergehenden Ansprüche, **dadurch gekennzeichnet, dass** ein Wärmetauscher vorgesehen ist der dazu eingerichtet ist die Temperatur eines Prozess-Kühlmittels, welches den bearbeiteten Bereich des Werkstücks während des Arbeitsprozesses direkt kühlt, an die Temperatur des Kühlmediums (23) anzupassen.

8. Werkzeugmaschine nach einem der vorhergehenden Ansprüche, **dadurch gekennzeichnet, dass** die Pumpe zum Einstellen des Volumenstroms des Kühlmediums (23) innerhalb der Hohlraumstrukturen (16) vorgesehen ist, und die Leistung der Pumpe und der Querschnitt der Hohlraumstrukturen (16) so eingerichtet sind, dass die maximale Temperaturdifferenz des Kühlmediums (23) zwischen den ersten Abschnitten (13a) und den zweiten Abschnitten (13b) im Arbeitsbetrieb auf unter 5° C einstellbar ist.

9. Werkzeugmaschine nach Anspruch 4 oder 5, **dadurch gekennzeichnet, dass** die Hohlraumstrukturen (16) des Maschinenbetts (15) parallel unter den Führungen (3) angeordnet sind, und dass der Ständer (5) lediglich zweite Bereiche aufweist.

10. Verfahren zum Temperieren des Maschinengestells einer Werkzeugmaschine mit im Arbeitsbetrieb wärmeerzeugenden Funktionskomponenten, die an dem Maschinengestell angeordnet sind, das Hohlraumstrukturen (16) aufweist, die einen Umwälzkreislauf ausbilden, in dem ein Kühlmedium (23) umgewälzt wird, und
das Maschinengestell erste Bereiche aufweist, und zweite Bereiche, die von den ersten Bereichen beabstandet sind und der Wärmeeintrag in den zweiten Bereichen geringer ist als in den ersten Bereichen und die Hohlraumstrukturen (16) erste Abschnitte (13a) aufweisen, die in den ersten Bereichen angeordnet sind und zweite Abschnitte (13b) die in den zweiten Bereichen angeordnet sind, mit den Schritten Ausgleich des Temperaturgefälles zwischen ersten und zweiten Bereichen durch Umwälzen des Kühlmediums (23) von den ersten Abschnitten (13a) in die zweiten Abschnitte (13b), ausschließlich innerhalb des Maschinengestells, wobei die ersten Abschnitte (13a) und die zweiten Abschnitte (13b) der Hohlraumstrukturen (16) einen geschlossenen Kreislauf bilden, der vollständig innerhalb des Maschinengestells angeordnet ist, sodass der Temperaturabgleich innerhalb des Maschinengestells stattfindet, wobei eine Pumpe vorgesehen ist zum Umwälzen des Kühlmediums und
**dadurch gekennzeichnet, dass** die Hohlraumstrukturen (16) zur Ausbildung des Umwälzkreislaufs zumindest teilweise von Hohlräumen einer Rippenstruktur (22) des Maschinengestells gebildet werden, und wobei die Hohlraumstrukturen über Durchgangsbohrungen miteinander verbunden sind.

11. Verfahren zum Temperieren des Maschinengestells einer Werkzeugmaschine nach Anspruch 10, wobei das Maschinengestell aus einem Maschinenbett (15) und einem Ständer (5) besteht, und das Maschinenbett (15) und der Ständer (5) Hohlraumstrukturen (16) aufweisen, **gekennzeichnet durch den Schritt**
Umwälzen des Kühlmediums (23) zum Ausgleich von Temperaturdifferenzen von den Hohlraumstrukturen (16) des Ständers (5) in die Hohlraumstrukturen (16) des Maschinenbetts (15) und zurück bzw. umgekehrt.

12. Verfahren zum Temperieren des Maschinengestells einer Werkzeugmaschine nach Anspruch 10, **dadurch gekennzeichnet, dass**
in einem ersten Schritt das Kühlmedium (23) durch die ersten Abschnitte (13a) der Hohlraumstrukturen (16) eines Maschinenbetts (15) des Maschinengestells gepumpt wird,
in einem zweiten Schritt das Kühlmedium (23) in die zweiten Abschnitte (13b) der Hohlraumstrukturen (16) eines Ständers (5) des Maschinenportals (18) der Werkzeugmaschine gepumpt wird und zurück,
und dass in einem weiteren Schritt das Kühlmedium (23) in erste Abschnitte (13a) der Hohlraumstrukturen (16) eines Querbalkens (19) des Maschinenportals (18) gepumpt wird und danach zurück in die zweiten Abschnitte (13b) der Hohlraumstrukturen (16) des Ständer des Maschinenportals (18).

13. Verfahren zum Temperieren des Maschinengestells einer Werkzeugmaschine nach einem der Ansprüche 10 bis 12, **gekennzeichnet durch den Schritt**
Anpassen der Temperatur eines Prozess-Kühlmittels, welches den bearbeiteten Bereich des Werkstücks während des Arbeitsprozesses direkt kühlt, an die Temperatur des Kühlmediums (23), über einen Wärmetauscher.

14. Verfahren zum Temperieren des Maschinengestells einer Werkzeugmaschine nach Anspruch 10, wobei das Maschinengestell aus einem Maschinenbett (15), einem Querbalken (19) und einem Ständer (5) besteht **gekennzeichnet durch die Schritte**
Umwälzen des Kühlmediums von Hohlraumstrukturen (16) des Ständers (5) in die Hohlraumstrukturen (16) des Maschinenbetts (15) und zurück, und/oder
Umwälzen des Kühlmediums von Hohlraumstrukturen (16) des Ständers (5) in Hohlraumstrukturen (16) des Querbalkens (19) und zurück.

## Claims

1. A machine tool, comprising a machine frame in which functional components are arranged generating heat during the operation, and which has cavity structures (16) for forming a circulation circuit in which a coolant (23) is circulated inside said machine frame, wherein
said machine frame has first areas in which the heat-generating functional components are arranged, and second areas spaced apart from said first areas, such that
a heat input in said second areas which is generated by said functional components, is smaller than that in said first areas, and said cavity structures (16) have first portions (13a) arranged in said first areas and second portions (13b) arranged in said second areas, **wherein**
said cavity structures (16) located in said machine frame are dimensioned such that, when said coolant (23) is circulated from said first portions (13a) to said second portions (13b), heat input by said functional components is dissipated into said second areas so as to cause a temperature equalization between said first and second areas, wherein
a pump for circulating said coolant is provided and said first portions (13a) and said second portions (13b) of said cavity structures form a closed circuit fully arranged within said machine frame such that temperature equalization takes place within said machine frame,
**characterized in that**
said cavity structures (16) for forming the circulation circuit are formed at least in part of cavities of a rib structure (22) of said machine frame, and wherein said cavity structures are connected with each other via through holes.

2. The machine tool according to claim 1, **characterized in that** the temperature equalization between said first and second areas only takes place via said machine frame without the use of a refrigeration machine.

3. The machine tool according to any of the preceding claims, **characterized in that** said coolant (23) is exclusively temperature controlled due to the heat flow via said machine frame from said first portions (13a) to said second portions (13b).

4. The machine tool according to any of the preceding claims, **characterized in that** said machine tool is configured as a portal machine, said machine frame comprises a machine bed (15) and a column (5), and said heat-generating functional components comprise a drive and guides (3), and said first and second portions (13a, 13b) are arranged in said machine bed (15) and/or in said column (5).

5. The machine tool according to claim 1, **characterized in that** said machine frame comprises a machine bed (15) and a column (5) and said machine bed (15) and said column (5) have cavity structures (16), and these cavity structures (16) communicate with one another in such a way that, for the purpose of equalization of temperature differences, said coolant (23) flows from said cavity structures (16) of said column (5) into those of said machine bed (15) and back or vice versa.

6. The machine tool according to any of the preceding claims, **characterized in that** said first portions (13a) of said cavity structures (16) are connected to said second portions (13b) of said cavity structures (16) via through holes, and the openings of said through holes are closed on outside surfaces of said machine frame by caps.

7. The machine tool according to any of the preceding claims, **characterized in that** a heat exchanger is provided which is configured to adjust a temperature of a process coolant which directly cools the machined area of a workpiece during a work process to a temperature of said coolant (23).

8. The machine tool according to any of the preceding claims, **characterized in that** said pump for adjusting the volume flow of said coolant (23) is provided within said cavity structures (16) and the output of said pump and the cross section of said cavity structures (16) are configured such that a maximum temperature difference of said coolant (23) between said first portions (13a) and said second portions (13b) is adjustable to below 5 °C during operation.

9. The machine tool according to claim 4 or 5, **characterized in that** said cavity structures (16) of said machine bed (15) are arranged in parallel below said guides (3), and said column (5) merely has second areas.

10. A method for controlling a temperature of a machine frame of a machine tool having functional components generating heat during the operation, said functional components being arranged on said machine frame which has cavity structures (16) forming a circulation circuit where a coolant (23) is circulated, said machine frame having first areas and second areas which are spaced apart from said first areas, a heat input into said second areas being less than that into said first areas, and said cavity structures (16) having first portions (13a) which are arranged in said first areas and second portions (13b) which are arranged in said second areas, said method comprising the steps of:
compensating for a temperature drop between said first and second areas by circulating said coolant (23) from said first portions (13a) into said second portions (13b) exclusively inside said machine frame, wherein said first portions (13a) and said second portions (13b) of said cavity structures (16) form a closed circuit fully arranged within said machine frame such that the temperature equalization takes place within said machine frame, wherein a pump for circulating said coolant is provided,
**characterized in that** said cavity structures (16) for forming the circulation circuit are formed at least in part from cavities of a rib structure (22) of said machine frame, and wherein said cavity structures are connected with each other via through holes.

11. A method for controlling a temperature of the machine frame of a machine tool according to claim 10, said machine frame consisting of a machine bed (15) and a column (5), and said machine bed (15) and said column (5) having cavity structures (16), **characterized by the step of**
circulating said coolant (23) for equalization of temperature differences from said cavity structures (16) of said column (5) into said cavity structures (16) of said machine bed (15) and back or vice versa.

12. A method for controlling a temperature of the machine frame of a machine tool according to claim 10, **characterized in that**
in a first step, said coolant (23) is pumped through said first portions (13a) of said cavity structures (16) of a machine bed (15) of said machine frame,
in a second step, said coolant (23) is pumped into said second portions (13b) of said cavity structures (16) of a column (5) of a machine portal (18) of said machine tool and back, and
in a further step, said coolant (23) is pumped into first portions (13a) of said cavity structures (16) of a crossbar (19) of said machine portal (18) and then back into said second portions (13b) of said cavity structures (16) of said column of said machine portal (18).

13. The method for controlling a temperature of the machine frame of a machine tool according to any of claims 10 to 12, **characterized by the step of**
adjusting a temperature of a process coolant which directly cools a machined area of a workpiece during the work process to a temperature of said coolant (23) via a heat exchanger.

14. The method for controlling a temperature of the machine frame of a machine tool according to claim 10, wherein said machine frame comprises a machine bed (15), a crossbar (19), and a column (5), **characterized by the steps of**
circulating said coolant from said cavity structures (16) of said column (5) into said cavity structures (16) of said machine bed (15) and back; and/or
circulating said coolant from said cavity structures (16) of said column (5) into said cavity structures (16) of said crossbar (19) and back.

## Revendications

1. Machine-outil comportant un bâti de machine sur lequel sont agencés des composants fonctionnels qui, pendant le fonctionnement de travail, génèrent de la chaleur, et qui présente des structures creuses (16) pour réaliser un circuit de circulation dans lequel circule un fluide de refroidissement (23) à l'intérieur du bâti de machine,
dans laquelle
le bâti de machine comprend des premières zones dans lesquelles sont agencés les composants fonctionnels générant de la chaleur, et des secondes zones qui sont espacées des premières zones, de sorte que
l'apport de chaleur généré par les composants fonctionnels dans les secondes zones est inférieur à celui dans les premières zones, et les structures creuses (16) comprennent des premières portions (13a) qui sont agencées dans les premières zones, et des secondes portions (13b) qui sont agencées dans les secondes zones,
les structures creuses (16) situées dans le bâti de machine sont dimensionnées de telle sorte que lors de la circulation du fluide de refroidissement (23) depuis les premières portions (13a) jusque dans les secondes portions (13b), la chaleur apportée par les composants fonctionnels est dissipée vers les secondes zones, et de cette manière une compensation de température est provoquée entre les premières et les secondes zones,
il est prévu une pompe pour faire circuler le fluide de refroidissement, et les premières portions (13a) et les secondes portions (13b) des structures creuses constituent un circuit fermé qui est agencé entièrement à l'intérieur du bâti de machine, de sorte que la compensation de température s'effectue à l'intérieur du bâti de machine,
**caractérisée en ce que**
les structures creuses (16) pour réaliser le circuit de circulation sont formées au moins partiellement par des creux d'une structure nervurée (22) du bâti de machine, et les structures creuses sont reliées entre elles par des perçages traversants.

2. Machine-outil selon la revendication 1,
**caractérisée en ce que**
la compensation de température entre les premières et les secondes zones s'effectue uniquement via le bâti de machine, sans utiliser une machine frigorifique.

3. Machine-outil selon l'une des revendications précédentes,
**caractérisée en ce que**
le fluide de refroidissement (23) est tempéré exclusivement par le flux de chaleur via le bâti de machine depuis les premières portions (13a) vers les secondes portions (13b).

4. Machine-outil selon l'une des revendications précédentes,
**caractérisée en ce que**
la machine-outil est conçue sous forme de machine à portique, le bâti de machine est constitué par un banc de machine (15) et par un montant (5), et les composants fonctionnels générant de la chaleur sont constitués par un entraînement et par des guidages (3), et les premières et les secondes portions (13a, 13b) sont agencées dans le banc de machine (15) et/ou dans le montant (5).

5. Machine-outil selon la revendication 1,
**caractérisée en ce que**
le bâti de machine est constitué par un banc de machine (15) et par un montant (5), et le banc de machine (15) et le montant (5) présentent des structures creuses (16), et ces structures creuses (16) sont en liaison entre elles de telle sorte que le fluide de refroidissement (23) circule depuis les structures creuses (16) du montant (5) jusque dans celles du banc de machine (15) et en retour, ou inversement, pour compenser des différences de température.

6. Machine-outil selon l'une des revendications précédentes,
**caractérisée en ce que**
les premières portions (13a) des structures creuses (16) sont reliées aux secondes portions (13b) des structures creuses (16) via des perçages traversants, et les ouvertures des perçages traversants sur les surfaces extérieures du bâti de machine sont refermées par des couvercles.

7. Machine-outil selon l'une des revendications précédentes,
**caractérisée en ce que**
il est prévu un échangeur de chaleur qui est conçu pour adapter la température d'un fluide de refroidissement de processus, qui fait refroidir directement la zone oeuvrée de la pièce à oeuvrer pendant le processus de travail, à la température du fluide de refroidissement (23).

8. Machine-outil selon l'une des revendications précédentes,
**caractérisée en ce que**
la pompe pour régler le flux volumique du fluide de refroidissement (23) est prévue à l'intérieur des structures creuses (16), et la performance de la pompe et la section transversale des structures creuses (16) sont conçues de telle sorte que la différence maximale de température du fluide de refroidissement (23) entre les premières portions (13a) et les secondes portions (13b) pendant le fonctionnement est réglable à moins de 5 °C.

9. Machine-outil selon la revendication 4 ou 5,
**caractérisée en ce que**
les structures creuses (16) du banc de machine (15) sont agencées parallèlement au-dessous des guidages (3), et **en ce que**
le montant (5) ne présente que des secondes zones.

10. Procédé pour tempérer le bâti de machine d'une machine-outil comportant des composants fonctionnels générant de la chaleur pendant le fonctionnement, agencés sur le bâti de machine qui présente des structures creuses (16) qui réalisent un circuit de circulation dans lequel circule un fluide de refroidissement (23), et
le bâti de machine comprend des premières zones et des secondes zones qui sont espacées des premières zones, et
l'apport de chaleur dans les secondes zones est inférieur à celui dans les premières zones, et
les structures creuses (16) comprennent des premières portions (13a) qui sont agencées dans les premières zones, et des secondes portions (13b) qui sont agencées dans les secondes zones,
comprenant les étapes consistant à
compenser le gradient de température entre les premières et les secondes zones par circulation du fluide de refroidissement (23) depuis les premières portions (13a) jusque dans les secondes portions (13b) exclusivement à l'intérieur du bâti de machine, les premières portions (13a) et les secondes portions (13b) des structures creuses (16) constituant un circuit fermé qui est agencé entièrement à l'intérieur du bâti de machine, de sorte que la compensation de température s'effectue à l'intérieur du bâti de machine,
une pompe étant prévue pour faire circuler le fluide de refroidissement,
**caractérisé en ce que**
les structures creuses (16) pour réaliser le circuit de circulation sont formées au moins partiellement par des creux d'une structure nervurée (22) du bâti de machine, et les structures creuses sont reliées entre elles par des perçages traversants.

11. Procédé pour tempérer le bâti de machine d'une machine-outil selon la revendication 10, dans lequel le bâti de machine est constitué par un banc de machine (15) et par un montant (5), et
le banc de machine (15) et le montant (5) présentent des structures creuses (16),
**caractérisé par** l'étape consistant à
faire circuler le fluide de refroidissement (23) pour compenser des différences de température depuis les structures creuses (16) du montant (5) jusque dans les structures creuses (16) du banc de machine (15) et en retour, ou inversement.

12. Procédé pour tempérer le bâti de machine d'une machine-outil selon la revendication 10, **caractérisé en ce que**
dans une première étape, le fluide de refroidissement (23) est pompé à travers les premières portions (13a) des structures creuses (16) d'un banc de machine (15) du bâti de machine,
dans une seconde étape, le fluide de refroidissement (23) est pompé dans les secondes portions (13b) des structures creuses (16) d'un montant (5) du portique de machine (18) de la machine-outil et en retour,
dans une autre étape, le fluide de refroidissement (23) est pompé dans des premières portions (13a) des structures creuses (16) d'une poutre transversale (19) du portique de machine (18) et ensuite en retour jusque dans les secondes portions (13b) des structures creuses (16) du montant du portique de machine (18).

13. Procédé pour tempérer le bâti de machine d'une machine-outil selon l'une des revendications 10 à 12, **caractérisé par** l'étape consistant à
adapter la température d'un fluide de refroidissement de processus qui fait refroidir directement la zone oeuvrée de la pièce à oeuvrer pendant le processus de travail, à la température du fluide de refroidissement (23) via un échangeur de chaleur.

14. Procédé pour tempérer le bâti de machine d'une machine-outil selon la revendication 10, dans lequel
le bâti de machine est constitué par un banc de machine (15), par une poutre transversale (19) et par un montant (5), **caractérisé par** les étapes consistant à faire circulaire le fluide de refroidissement depuis des structures creuses (16) du montant (5) jusque dans les structures creuses (16) du banc de machine (15), et en retour, et/ou
faire circulaire le fluide de refroidissement depuis des structures creuses (16) du montant (5) jusque dans les structures creuses (16) de la poutre transversale (19), et en retour.
